(19) Europäisches Patentamt
European Patent Office
Office européen des brevets

(11) **EP 2 589 980 A1**

(12) **EUROPÄISCHE PATENTANMELDUNG**

(43) Veröffentlichungstag:
**08.05.2013 Patentblatt 2013/19**

(51) Int Cl.:
***G01S 7/483*** *(2006.01)*     ***G01S 17/10*** *(2006.01)*

(21) Anmeldenummer: **11187964.9**

(22) Anmeldetag: **04.11.2011**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Leica Geosystems AG**
**9435 Heerbrugg (CH)**

(72) Erfinder:
• **Giger, Kurt**
**CH-9464 Rüthi (CH)**

• **Metzler, Reto**
**CH-9445 Rebstein (CH)**
• **Fiegl, Bernhard**
**CH-9437 Marbach (CH)**

(74) Vertreter: **Kaminski Harmann**
**Patentanwälte AG**
**Landstrasse 124**
**9490 Vaduz (LI)**

(54) **Entfernungsmesser**

(57)     Die Erfindung betrifft einen elektrooptischen Entfernungsmesser, insbesondere Laser-Distanzmesser, mit einer Sendeeinheit zur Aussendung von intensitätsmodulierter optischer Strahlung, einer Empfangseinheit zum Empfang eines von einem Zielobjekt zurückgeworfenen Anteils der optischen Strahlung durch ein photosensitives elektrisches Bauelement und Umwandlung in ein elektrisches Empfangssignal, einem Eingangsfilter zur Filterung des Empfangssignals, einem Analog-Digital-Wandler zur Digitalisierung des gefilterten Empfangssignals und einer elektronischen Auswerteeinheit, welche auf Basis einer Signallaufzeit anhand des digitalisierten Empfangssignals eine Distanz vom Entfernungsmesser zum Zielobjekt ermittelt.

Das Eingangsfilter ist eine zeitdiskret und wertkontinuierlich implementierte, insbesondere digitale, Filterstruktur.

Fig. 1

**EP 2 589 980 A1**

**Beschreibung**

Die Erfindung betrifft einen Entfernungsmesser nach dem Oberbegriff des Anspruchs 1 und ein Verfahren zur Entfernungsmessung nach dem Oberbegriff des Anspruchs 12.

Bei elektrooptischen Distanzmessern (EDM) wird ein optisches Signal vom Gerät in Richtung des Zielobjekts - dessen Distanz es zu bestimmen gilt - ausgesendet, beispielsweise als optische Strahlung in Form von Laserlicht. Um den zur Vermessung angezielten Punkt auf dem Zielobjekt erkennbar zu machen, kann dabei sichtbares Licht verwendet werden. Die Oberfläche des Zielobjekts wirft zumindest einen Teil des optischen Signals zurück, meist in Form einer diffusen Reflektion. Die zurückgeworfene optische Strahlung wird im Gerät von einem photosensitiven Element in ein elektrisches Signal umgewandelt. Unter Kenntnis der Ausbreitungsgeschwindigkeit des optischen Signals und anhand der ermittelten Laufzeit, welche für das Zurücklegen der Entfernung vom Gerät zum Zielobjekt und retour benötigt wird, kann die Distanz zwischen Gerät und Zielobjekt bestimmt werden. Vielfach befinden sich dabei im optischen Sende- bzw. Empfangspfad optische Komponenten zur Strahlformung, Umlenkung, Filterung, etc. - wie etwa Linsen, Wellenlängenfilter, Spiegel, usw. Zur Kompensation von Einflüssen, welche die Messergebnisse verfälschen könnten, (beispielsweise Temperatureinflüsse, Bauteiltoleranzen, Driften von elektronischen Komponenten, etc.) kann ein Teil des ausgesendeten optischen Signals als Referenzsignal über eine Referenzstrecke bekannter Länge von der Lichtquelle zum lichtempfindlichen Empfangselement geführt werden. Die Referenzstrecke kann dabei fix im Gerät eingebaut oder als ein beispielsweise einschwenkbares, oder aufsteckbares Umlenkelement ausgebildet sein. Das von diesem Referenzsignal resultierende Empfangssignal kann von dem zur Messung verwendeten oder einem dezidierten photosensitiven Element empfangen werden. Das resultierende elektrische Referenzsignal kann zur Referenzierung/Kalibrierung der ermittelten Messwerte herangezogen werden.

Um eine entsprechend hohe Genauigkeit der Distanzmessung zu erlangen, sind aufgrund der hohen Ausbreitungsgeschwindigkeit von optischer Strahlung im Freiraum die Anforderungen an das zeitliche Auflösungsvermögen zur Distanzmessung recht hoch. Beispielsweise ist für eine Distanzauflösung von 1 mm eine Zeitauflösung mit einer Genauigkeit von etwa 6,6 Pico-Sekunden erforderlich.

Das ausgesendete optische Signal ist dabei in seiner Intensitätsamplitude moduliert. Neben optischen Signalen können in analoger Weise auch elektromagnetische Wellen anderer Wellenlängen verwendet werden, beispielsweise Radarwellen, Ultraschall, etc.

Bezüglich der emittierbaren Signalleistung sind den hier behandelten elektrooptischen EDM jedoch Grenzen vorgegeben. So bestimmt bei der Emission von Laserlicht die Augensicherheit eine maximal zulässige mittlere Signalleistung, welche emittiert werden darf. Um für die Messung dennoch hinreichend starke Signalintensitäten zu erhalten, welche vom Empfänger detektierbar sind, wird daher im Pulsbetrieb gearbeitet. Es werden kurze Pulse mit hoher Spitzenleistung gefolgt von Pausen ohne Signalaussendung ausgesendet. Somit weist der zurückgeworfene Anteil der Pulse eine genügend hohe Intensität auf, um diese aus den Hintergrundstörungen und dem Rauschen, insbesondere auch bei Vorhandensein von Hintergrundlicht (Sonnenlicht, künstlicher Beleuchtung, etc.), auswerten zu können.

Wie etwa in EP 1 957 668 beschrieben, birgt speziell das Aussenden von Paketen von Pulsen gefolgt von Pausen ohne Pulsaussendung - dem so genannten Burst-Betrieb - nicht nur den Vorteil einer reduzierten mittleren Leistung des Signals, sondern zudem auch Vorteile beim erzielbaren Signal-Rausch-Verhältnis (SNR). Zum einen kann daher die Signalintensität während der aktiven Burst-Zeit entsprechend höher sein als bei einem kontinuierlichen Aussenden - ohne dabei die mittlere Leistungsgrenze zu überschreiten. Zum anderen wird auch das Rauschen nur in den Zeitfenstern während der aktiven Burstsdauer aufgenommen - jedoch nicht aber während der Austastlücken, da während diesen keine Signalauswertung erfolgt. Durch ein Tastverhältnis (oder Duty-Cycle) der Bursts z.B. von 0.1 bzw. 1:10 oder 10 % (10 % der Burstdauer Signalemission + 90 % Pause) lässt sich somit eine Verbesserung des SNR von etwa Quadratwurzel aus 1/Duty-Cycle erzielen, im Beispiel von 10 % also eine Verbesserung um einen Faktor von mehr als 3. Die Anzahl der Pulse pro Paket kann je nach Auswertekonzept und Messsituation variiert werden, bis hin zu einzelnen Pulsen (wobei dann im Allgemeinen nicht mehr von Bursts gesprochen wird).

Zur Ermittlung der Laufzeit des Signals ist zum einen die so genannte Time-of-Flight (TOF) Methode bekannt, welche die Zeit zwischen dem Aussenden und Empfangen eines Lichtpulses ermittelt, wobei die Zeitmessung anhand der Flanke, des Spitzenwerts, oder einer anderen Charakteristik der Pulsform erfolgt. Unter Pulsform ist dabei ein zeitlicher Lichtintensitätsverlauf des Empfangssignals, speziell des empfangenen Lichtpulses - erfasst durch das photosensitive Element - zu verstehen. Dabei kann der Zeitpunkt des Sendens entweder anhand eines elektrischen Auslöseimpulses, des an den Sender angelegten Signals oder anhand des oben erwähnten Referenzsignals ermittelt werden.

In der Distanzmessung kann es zu Mehrdeutigkeiten kommen, falls die Signallaufzeit den Kehrwert der Puls- oder Burst-Senderate übersteigt und somit mehrere Signale zugleich zwischen Gerät und Messobjekt unterwegs sind, wodurch ein Empfangspuls bzw. Empfangsburst nicht mehr eindeutig seinem jeweiligen Sendepuls bzw. Sendeburst zugeordnet werden kann. Es ist somit ohne weitere Maßnahmen unklar, ob die Distanz oder ein ganzzahliges Vielfaches dieser gemessen wurde.

Zum anderen ist das so genannte Phasenmessprinzip bekannt, welches die Signallaufzeit durch Vergleich der Phasenlage der Amplitudenmodulation des gesendeten und empfangenen Signals ermittelt. Dabei hat das Messergebnis bei einer Sendefrequenz aber Mehrdeutigkeiten in Einheiten der Signalperiodendauer, sodass weitere Maßnahmen zur Auflösung dieser Mehrdeutigkeiten erforderlich sind. Beispielsweise zeigt WO 2006/063740 ein Messen mit mehreren Signalfrequenzen, welche in unterschiedlichen Eindeutigkeitsbereichen resultieren, wodurch falsche Lösungen ausgeschlossen werden können. Auch WO 2007/022927 behandelt Eindeutigkeiten in der Phasenmessung.

Bei EDMs ist aufgrund der geforderten hohen Zeitauflösung eine Zeitdehnung des Empfangssignals, (neben der direkten Signalauswertung) durch heterodynes Heruntermischen des, mittels des photoelektrischen Elements empfangenen, Eingangssignals in ein Basisband geringerer Frequenz bekannt. Das langsame Basisbandsignal lässt sich einfacher Auswerten, allerdings geht beim Heruntermischen ein beträchtlicher Teil an Signalinformation und Signalenergie ungenutzt verloren. Diese Thematik wird beispielsweise auch in WO 2006/063740 behandelt. Eine weitere Herausforderung stellen die hierzu erforderlichen hochfrequenten Mischer dar, da diese aufwändig in ihrer Ausführung und vielfach auch nichtlinear sind. Beispielsweise ist eine hierfür oftmals angewandte Avalanche-Photodiode (APD) als Mischdiode zum einen ansteuerungstechnisch aufwändig und liefert zum anderen auch nur mäßig gute Mischergebnisse.

Zur Mischung muss im System zudem mit mehreren Frequenzen oder phasenversetzten Signalen gearbeitet werden. Diese Frequenz oder phasenversetzten Signale neigen zu starken Übersprech-Effekten und damit verbundenen Störungen der Messsignale, speziell in der Auswerteelektronik. Die verschiedenen Frequenzen müssen zudem auch erzeugt werden (bspw. durch einen Synthesizer, PLL, DLL, etc.), wozu weitere Systemkomponenten erforderlich sind. Auch benötigen Frequenz- und oder Phasenwechsel immer gewisse Einschwingzeiten in der Elektronik, speziell in den analogen Filtern und Komponenten.

Die Signale, Versorgungen, etc. im elektronischen System eines EDM müssen zur Störungsunterdrückung entsprechend gefiltert werden, was sich bei wechselnden Frequenzen zusätzlich schwierig gestalten kann. Die Einschwingvorgänge der Filter bei der Messung können zudem die benötige Auswertezeit verlängern bzw. die Auswerte-Performance reduzieren. Beispielsweise können im Falle eines Burst-Betriebs die ersten Pulse des empfangenen Bursts vielfach nicht zur Auswertung herangezogen werden, da diese bedingt durch Einschwingvorgänge in der Elektronik noch verfälscht sind. Auch sind die verwendeten HF-Filter-Schaltkreise diskret und analog aufzubauen, da für eine digitale Filterung erst eine Digitalisierung mit sehr hoher zeitlicher Auflösung erforderlich wäre, welche z.B. in handgehaltenen Baustellenmessgeräten nicht - oder zumindest nicht ökonomisch - durchführbar ist. Die analoge Filterung schränkt aber im Gegensatz zur digitalen Filterung die erzielbaren Filtercharakteristiken und auch die Optionen zur Filterparameteranpassung - insbesondere zur Laufzeit - drastisch ein.

Es sind neben den mischenden EDM-Systemen auch die so genannten Direkt-Sampling oder HF-Sampling Systeme bekannt. Bei diesen wird das hochfrequente (ggf. verstärkte und/oder transimpedanzgewandelte) Ausgangssignal des photosensitiven Elements als hochfrequentes (HF-) Signal direkt einer Analog-Digital-Konversion (ADC) zugeführt. Aufgrund der bei einer Distanzmessung geforderten hohen zeitlichen Auflösung, ist hierfür ein entsprechend schneller und teurer - so genannter (Ultra-)High-Speed-ADC nötig. Derartige schnelle und hochauflösende ADC sind z.B. für handgehaltene Baustellenmessgeräten zu teuer, haben einen zu hohen Stromverbrauch und die dabei verwendeten Halbleiterstrukturen sind hoch spezialisiert und vielfach nicht mit Standard-Halbleiterprozessen herstellbar. Wird die Abtastrate gegenüber der Auflösung der standardmäßig am Markt verfügbaren ADCs betrachtet, so geht als Daumenregel eine Verdoppelung der Abtastfrequenz etwa mit einer Reduktion der Amplitudenauflösung um ein Bit einher. Eine Erhöhung der Samplingfrequenz eines Analog-Digital-Wandlers geht daher meist auch mit der Reduktion der Bittiefe oder Amplitudenauflösung einher, welche jedoch für eine präzise Bestimmung der Phasenlage bedeutsam ist, da der Extremfall einer 1-Bit Auflösung quasi einer TOF-Messung entsprechen würde. Auch die Weiterverarbeitung der bei einer schnellen und hochauflösenden Analog-Digital-Wandlung entstehenden digitalen Messdatenflut, insbesondere in Echtzeit, stellt enorme Anforderungen an die Auswerte-Hardware, was unter anderem auch mit einem erhöhten Stromverbrauch einhergeht.

Weiters bewirkt jede Digitalisierung auch ein Heruntermischen der Vielfachen der Samplingfrequenz - das so genannte Aliasing. Deshalb sind entsprechende möglichst steile Signalfilter vor der Digitalisierung erforderlich, welche diese Aliasing-Frequenzen über der halben Samplingfrequenz des ADCs hinreichend unterdrükken, um eine Verfälschung des Messsignals durch Aliasing-Effekte zu vermeiden bzw. diese auf ein akzeptables Maß zu reduzieren. Die halbe Samplingfrequenz entspricht dabei genau genommen der Bandbreite des zu digitalisierenden Messsignals (wobei die Bandbreite nicht zwingend im Basisband liegen - also nicht bei einer Frequenz von Null beginnen muss). Die zur Aliasingfilterung benötigten analogen, hochfrequenten Filter hoher Ordnung sind vielfach entsprechend aufwändig in ihrem schaltungstechnischen Aufbau und neigen bei den erforderlichen hohen Ordnungen tendenziell zu Eigenschwingungen oder Instabilitäten. Zudem ist für eine genaue Distanzmessung ein Filter mit linearem Phasengang erstrebenswert, um die Gruppenlaufzeit der zu evaluierenden Pulse möglichst frequenzunabhängig zu gestalten und somit eine Dispersion der Pulsform zu vermeiden bzw. diese möglichst gering zu halten. Selbst bei einer Auswertung unter Einbezug eines Referenzsignals können derartige Effekte der Auswerteschaltung nicht oder nur teilweise kompensiert werden.

Beispielsweise zeigt WO 2011/076907 einen direkt abtastenden Distanzmesser mit einem Tiefpassfilter von zumindest 7. Ordnung als Aliasing-Filter vor der Analog-Digital-Wandlung des HF-Signals mittels eines schnellen ADCs.

Als Aliasing-Filter würden sich aufgrund ihrer Filtercharakteristik (welche auch in weiten Breichen konfigurierbar und parametrierbar ist) die aus der digitalen Filtertechnik bekannten Endlichen-Impulsantwort-Filter (FIR-Filter) gut eignen. Diese Filter werden jedoch digital implementiert, wohingegen das Aliasing bereits vor der Digitalisierung unterdrückt werden muss, da es in der digitalisierten Repräsentation so gut wie nicht mehr vom eigentlichen Messsignal unterschieden werden kann. Der Ansatz eines Oversamplings für eine digitale Aliasing-filterung kommt aufgrund der anwendungsbedingt ohnehin schon notwendigen, hohen Samplingfrequenzen in der hier beschriebenen Anwendung nicht in Betracht. Digitale Filter, insbesondere FIR-Filter, werden daher im Stand der Technik erst nach der Digitalisierung - und somit nicht zur Vermeidung von Aliasing, sondern für andere Signalkonditionierungen eingesetzt.

Eine weiterer limitierender Faktor bezüglich der Erreichung hoher Distanzgenauigkeiten im Stand der Technik sind auch Übersprecheffekte in der Elektronik. Hierbei ist zum eine der Sender mit den anwendungsbedingt gewünschten, kurzen Pulsen mit hohen Amplitudenwerten eine potenzielle, breitbandige Störquelle.

Zudem stellen sich auch Signale mit unterschiedlichsten Frequenzen und/oder Phasenlagen, welche zur Distanzauswertung auf demselben Elektronik-Board erforderlich sind, bezüglich des Übersprechens als problematisch heraus, speziell bei direktem HF-Sampling. Ein entsprechendes Filtern oder eine andersartige Unterdrückung der unterschiedlichen Frequenzen im System, insbesondere auch von phasenverschobenen Signalen mit (zumindest annähernd) gleichen Frequenzen, gestaltet sich schwierig. Kommt eine Mischfrequenz, welche gegenüber der Sendefrequenz und/oder Abtastfrequenz verschoben ist zum Einsatz, so können diese Frequenzen in den meist sensitiv ausgelegten, analogen Schaltkreisen des Empfangsmoduls einstören und die Messsignale verfälschen bzw. diese mit zusätzlichen Störungen überlagern.

Zusammengefasst ist die vorliegende Erfindung im Gebiet der Laserdistanzmessung mit High Frequency Direct Sampling (HF-Sampling) angesiedelt. Bei dieser Technologie wird das empfangene, modulierte Hochfrequenzsignal ohne vorrangige analoge Mischung abgetastet. Um dabei genügend Stützwerte für eine genaue Auswertung der Signallaufzeit zu bekommen, muss im Stand der Technik das HF-Signal mit einer höheren Rate abgetastet werden als die auszuwertende Signalfrequenz, entsprechend des Abtasttheorems mindestens mit der so genannten Nyquist Frequenz (oder höher, was auch als Oversampling bezeichnet wird).

Es ist eine Aufgabe der vorliegenden Erfindung, einen optoelektronischen Distanzmesser zu verbessern, insbesondere eine Erhöhung der Distanzmessgenauigkeit, der Messrate und/oder eine Steigerung der Sensitivität zu erreichen.

Eine Aufgabe ist dabei die Auswertung des Empfangssignals im EDM zu verbessern, im speziellen in Bezug auf das Unterdrücken von Störungen und Verbessern des erzielbaren Signal/Rausch-Verhältnis.

Die Verbesserung der Abtastung eines hochfrequenten Ausgangssignals des photosensitiven Elements ist eine weitere Aufgabe, speziell unter ökonomischen Gesichtspunkten, wie Reduktion der erforderlichen Digitalisierungsrate, Vermeidung von analogen Abstimmvorgängen bei der Geräteproduktion, Reduktion von Komponentenanzahl und Komponentenkosten.

Als spezielle Aufgabe ist dabei insbesondere eine Konditionierung des Empfangssignals vor der Auswertung Laufzeit bzw. Distanz anhand der digitalisierten Signalinformationen. Es ist dabei auch eine Teilaufgabe, die Signalfilterung in der Empfangsschaltung des EDMs zu verbessern. Als weitere Teilaufgaben stellen sich dabei die Vermeidung von Übersprechen innerhalb des EDM-Systems und die Entwicklung eines entsprechend angepassten Mess- und Auswertekonzeptes, welche auch für sich als eigenständige Erfindungen betrachtet werden kann.

Erfindungsgemäss werden dabei in der EDM-Empfangsschaltung die Vorteile von digitalen Filterstrukturen eingebracht, ohne dabei eine Analog-Digital-Wandlung mit hoher Zeit- und Amplitudenauflösung zu erfordern, wie dies etwa im Rahmen einer EDM-Empfangsschaltung mit einer die Nyquistbedingung des Empfangssignals einhaltenden direkten ADC-Wandlung oder gar eines Systems mit Oversampling und FIR-Filterung von Aliasing.

Erreicht wird dies durch eine zeitdiskrete, aber wertkontinuierliche Implementierung der Filterstruktur. Dabei werden die Vorteile einer Zeitdiskreten, Filterung mit einer endlichen Impulsantwort, wie diese etwa von einem FIR-Filter bekannt ist, mit einer analogen Signalrepräsentation vereint. Der zeitdiskrete Aufbau eröffnet dabei die von der digitalen Filterung bekannten Vorzüge, wie etwa flexible Parametrierbarkeit, Einschwingverhalten, Stabilität, etc. Die analoge Signaldarstellung und -verarbeitung vermeidet dabei Quantisierungseffekte sowie eine hohe Datenrate und auch die damit verbundene Forderung nach einer, den Filteralgorithmus implementierenden, schnellen digitalen Recheneinheit zur Signalverarbeitung.

Durch die somit erreichte, effiziente und zielgerichtete Filterung kann somit beispielsweise auch durch eine gezielte Unterdrückung von ansonsten problematischen Aliasing-Frequenzbereichen, eine Unterabtastung des erfindungsgemäss gefilterten Signals durchgeführt werden, ohne dabei das gewünschte Messergebnis merklich zu beeinträchtigen. Somit kann die Analog-zu-Digital-Wandlung mit niedriger zeitlicher Rate durchgeführt werden, was beispielsweise einen Verzicht auf hochspezialisierte, schnelle ADCs ermöglicht.

Insbesondere, da eine derartige Struktur mit Standard-Halbleiterprozessen realisierbar ist, lässt sich eine solche Struktur ökonomisch in eine EDM-Auswerteschaltung integrieren.

Die Erfindung behandelt einen elektrooptischen Entfernungsmesser, insbesondere Laser-Distanzmesser, mit:

■ einer Sendeeinheit, insbesondere mit einer Laserdiode und einem Laserdiodentreiber, zur Aussendung von intensitätsmodulierter optischer Strahlung, insbesondere als burstmodulierte Strahlung mit einer Burstrate, einem Burst-Tastverhältnis und einer Pulsfrequenz innerhalb eines Bursts,

■ einer Empfangseinheit zum Empfang eines von einem Zielobjekt zurückgeworfenen Anteils der optischen Strahlung durch ein photosensitives elektrisches Bauelement mit einem elektrischen Ausgangssignal als Empfangssignal, insbesondere mit einer Photodiode,

■ einem Eingangsfilter zur Filterung des Empfangssignals,

■ einem Analog-Digital-Wandler zur Digitalisierung des gefilterten Empfangssignals und

■ einer elektronischen Auswerteeinheit, welche auf Basis einer Signallaufzeit anhand des digitalisierten Empfangssignals eine Distanz vom Entfernungsmesser zum Zielobjekt ermittelt.

Dabei ist das Eingangsfilter eine zeitdiskret und wertkontinuierlich implementierte, insbesondere digitale, Filterstruktur, insbesondere eine FIR-Filterstruktur.

Das Eingangsfilter kann mit einer zeitquantifizierenden Abtaststufe für das Eingangssignal, einer analogen Gewichtungsstufe der Amplitudenwerte mit Koeffizienten und einer analogen Summationsstufe und einer zeitdiskreten Ausgangsstufe aufgebaut sein.

Entsprechend der vorliegenden Erfindung kann die Empfangsschaltung auch mit einer tieferen Frequenz als die eigentliche Nyquist Frequenz des Empfangenen Signals abgetastet werden. In diesem Fall erhöhen sich jedoch die Anforderungen an das Anti-Aliasing-Filter. Ein derartiges Undersampling oder Unterabtastung ermöglicht ein ökonomisches Abtasten und Digitalisieren von hochfrequenten Signalen in einen EDM, speziell unter Nutzung von Standard-Elektronikkomponenten oder Standard-Halbleiterprozessen und bedingt durch die hierfür erforderlichen niedrigeren Taktraten auch mit einem moderaten Stromverbrauch.

Für ein Undersampling mit

$$f_s < 2 \cdot f_{sig}$$

mit: fs = Samplingfrequenz,
fsig = Signalfrequenz,

sind die Anforderungen an die Filterung deutlich höher als bei Abtastung mit der doppelten Signalfrequenz oder mehr, beispielsweise der ingenieurmäßig oft verwendeten Dreifach-Regel. Bei einer gewöhnlichen, der A/D-Wandlung vorgelagerten Aliasing-Filterung, wie diese im Lehrbuch beschrieben ist, genügt ein einfacher Tiefpassfilter, vorzugsweise von entsprechend hoher Ordnung, beispielsweise etwa 4. oder 6. Ordnung.

Die Unterdrückung der Aliasingbänder bei den Frequenzen fn_att bei

$$f_{n\_att} = f_{sig} + n \cdot f_s$$

mit: n = E(N),
im Falle einer Unterabtastung soll dabei jedoch beispielsweise mindestens 20 dB oder mehr betragen, um die undersamplingbedingten Störeinflüsse durch Aliasing und spektralen Spiegelungen soweit zu unterdrücken, dass eine hinreichende Messgenauigkeit erzielt werden kann. Insbesondere sollten dabei die Aliasing-relevanten Frequenzbereiche, welche sich mit dem interessierenden Frequenzband des Messsignals überlagern würden, gedämpft werden, vorzugsweise noch stärker als die oben beispielhaft genannten 20 dB.

Um diese Anforderungen erfüllen zu können, kann beispielsweise eine Grundstruktur ähnlich eines Sampling Intermediate Frequency Filters eingesetzt werden. Eine Ausführungsform eines solchen Filters für Kommunikationssysteme wird beispielsweise in WO 2009/062306 beschrieben.

Mit dem erfindungsgemäß im Empfangsschaltkreis eines EDM verwendeten Filter, können hohe Dämpfungen erzielt werden, beispielsweise im Bereich von 20 dB und mehr, insbesondere im Frequenzbereich der Spiegel- und/oder Aliasing-Bänder. Weiters benötigt ein derart aufgebautes Filter kein Trimmen des Chips während der Produktion, die Dämpfungscharakteristik ist stabil über dem Temperaturbereich und das Filter ist auch alterungsresistent.

Eine erfindungsgemäße Weiterbildung kann daher eine Kombination von Undersampling und einem erfindungsgemäßen Filter sein. Diese ermöglicht eine wirtschaftliche Umsetzung eines HF-Sampling-Konzepts, speziell da eine praktische Realisierbarkeit mittels Standard-Halbleiterprozessen eine kostengünstige Fertigung der Empfangsschaltung als Ein- oder Mehrchipsystem ermöglicht.

Die so genannten Sampling-Intermediate-Frequency-Filter sind in der Nachrichtentechnik für Empfangsstufen in kabellosen Kommunikationssystemen, wie etwa Bluetooth oder Zigbee bekannt. Das verwendete Prinzip kann als eine Ausführungsform eines diskret (oder analoger) Aufbaugebauten FIR-Filters beschrieben werden, welches eine zeitquantisierende Abtastung des Eingangssignals durchführt. Seine Aufbaustruktur kann dabei von der klassischen FIR-Normalform abweichend für eine erfindungsgemäße Implementierung optimiert sein, strukturell stellt es aber meist eine Implementierung eines FIR-Filters dar. Im Gegensatz zum rein digitalen FIR-Filter Pendant werden die Signalamplitudenwerte dabei jedoch nicht diskretisiert bzw. digitalisiert, sondern analog verarbeitet. Bei entsprechender Konfiguration kann diese Filterstruktur eine hohe Unterdrückung von Aliasing- (oder Image-) Frequenzen erzielen. Derartige Filter können somit ein effizientes Konditionieren des empfangenen Signals durchführen, durch welches - trotz Unterabtastung - Aliasing-Effekte in einem hohen Maße unterdrückt werden können. Daher kann das Ausgangssignal des Filters direkt einer analog-zu-digital Konversion (ADC) zugeführt werden, ohne eine weitere Aliasing-Filterung oder eine Mischerstufe. Durch die entsprechend hohe Unterdrückung der unerwünschten Spektralbereiche kann dabei die Signalauswertung auch im Undersampling-Betrieb - mit einem vergleichsweise langsamen bzw. moderat schnellen ADC - durchgeführt werden, ohne dabei ernstzunehmende Signalverfälschungen durch Aliasing-Artefakte zu erhalten.

Im Vergleich zu bekannten Direkt-Sampling Ansätzen in einem EDM können durch die erfindungsgemäße Filterung auch erfindungsgemäß die Anforderungen an den ADC bezüglich der Abtastgeschwindigkeit (=Zeitauflösung) deutlich entspannt werden, ohne dabei Einbußen bei der Signalqualität zu erhalten. Dies wirkt sich beispielsweise auch positiv auf den Energieverbrauch und den Platzbedarf der Schaltung aus. Ein Vorteil eines derartigen Filters ist auch, dass praktisch keine Einschwingzeit des Filters benötigt wird.

Die Verwendung und Struktur eines Filters in der Kommunikationstechnik ist anders, und es sind entsprechende Modifikationen und Konfigurationen dieses grundsätzlichen Konzeptes nötig, um eine derartige Struktur an die EDM-Erfordernisse anzupassen. Ein EDM erfordert aufgrund der bei einer elektrooptischen Distanzmessung angewandten Signale und deren Auswertungsanforderungen andere Designkriterien als ein nachrichtentechnisches Signal-übertragungssystem. Nicht nur die verwendete Signalcharakteristik, sondern auch die Störungscharakteristik in einem EDM ist anders gelagert. So sind die auszuwertenden Signalparameter bei einem EDM rein vom Funktionsprinzip her auf ein genaues Bestimmen einer Signallaufzeit gerichtet, was bei einem Kommunikationssystem von keinerlei Bedeutung ist. Bei derartigen Informationsübertragungssystemen ist vielmehr eine getreue Rekonstruktion der Sendesignalform in analogen Systemen bzw. eine Erkennung von Binärzuständen mit entsprechend hohem Störabstand in digitalen Systemen von Bedeutung. Zeitverschiebungen finden bei Kommunikationssystemen allenfalls im Rahmen eines so genannten Diversity-Empfangs Berücksichtigung, jedoch nicht mit dem Zwecke einer Distanzbestimmung, sondern lediglich zur Verbesserung der Empfangsqualität. Die Designziele bei der Entwicklung eines EDMs sind daher anders gelagert als in der Nachrichtentechnik, weshalb allenfalls bekannte Empfängerschaltungen aus der Kommunikationstechnik nicht in offensichtlicher Weise und auch nicht Eins zu Eins in einem EDM anwendbar sind.

Auch die Charakteristiken der auszuwertenden Signale eines EDM sind mit jenen eines Kommunikationssystems nicht vergleichbar. Nachrichtentechnische Systeme haben einzig eine sichere Datenrekonstruktion aus den übertragenen Signalen zur Aufgabe. In dem hier beschriebenen EDM wird mit Paketen von Lichtpulsen gearbeitet, von welchen es die Signallaufzeit zur und von der Oberfläche des zurückstreuenden Messobjekts zu bestimmen gilt. Eine hochgenaue Zeitbestimmung kann anhand des Unterschieds der Laufzeit eines über eine interne Referenzstrecke mit bekannter Länge geleiteten Anteils des Lichtes - gegenüber einem vom Zielobjekt zurückgestreuten Anteil des Lichtes - erfolgen. Um eine entsprechend hohe Zeitauflösung zu erzielen, ist hierbei die Phasenlage des Pulses von Relevanz - welche erfindungsgemäß durch die Unterabtastung in einer zeitgedehnten Darstellung ausgewertet werden kann.

Aufgrund der hohen Synchronitätsanforderungen von Sender und Empfänger in einem EDM sind diese beiden Schaltungsteile im Stand der Technik zusammen auf einer Platine oder gar zusammen in einem Chip integriert. Allenfalls ist ein Trägerelement mit einer Photodiode zu Justagezwecken gegenüber dem Sender beweglich angeordnet, wie dies etwa in EP 1 913 416 gezeigt ist. Die zugehörige Signalgenerierung, Signalauswertung und Signalverarbeitung von Sender und Empfänger ist dabei jedoch auf derselben Elektronikeinheit integriert.

Das Vermeiden von Signal-Übersprechen ist bei Distanzmessern eine große Herausforderung, insbesondere wenn ein HF-Sampling des Eingangssignals vorgenommen wird. Um eine optimale Trennung von Sender und Empfänger hinsichtlich der elektromagnetischen Störübertragung zu erreichen, kann dabei die Sendeschaltung und die Empfangsschaltung jeweils mittels einer separaten Leiterplatte bzw. mittels Integration in einen jeweils separaten Chip erzielt werden.

Dabei sind die Eingangsschaltung - im speziellen zumindest der erfindungsgemäße Anti-Aliasing Filter und der A/D Wandler auf einem ersten Chip als Hauptchip integriert. Weiters kann der Hauptchip beispielsweise auch einen Prozessorkern zur Ausführung der Datenverarbeitung, welche zur Ermittlung der Distanz notwendig ist, enthalten. Dieser Chip kann nur mit einer einzigen Taktrate bzw. ganzzahlig davon abgeleiteten Taktsignale arbeiten, wodurch ein internes Übersprechen per Design vermieden oder zumindest reduziert wird. Auch gestaltet sich die Auslegung von allenfalls nötigen, externen Filtern, z.B. Versorgungsfiltern, etc. entsprechend einfacher, wenn diese nur auf eine Frequenz ausgelegt werden müssen. Das erfindungsgemäße Fehlen eines frequenz- bzw. phasenverschobenen Mischsignals im Empfänger, welches im Stand der Technik beispielsweise in Form einer vergleichsweise hohen Spannung einer Avalanche-Photodiode zugeführt werden muss (hoch speziell im Gegensatz zu den auszuwertenden Nutzsignalen), kann vorteilhaft zur Reduktion des Übersprechverhaltens genutzt werden. Signalübersprechen ist speziell bei heterodyner Mischung eine wesentliche Störquelle, da das Mischsignal frequenz- oder phasenverschoben - also asynchron zum Rest der Auswerteschaltung - vorliegen muss und meist nicht einfach ausgefiltert werden kann.

Entsprechend dieses weiteren Aspekts der vorliegenden Erfindung ist der Empfänger-Chip - bzw. die Empfängerplatine - intern synchron. Die zur Zeitdehnung erforderlichen phasenverschobenen Signale werden in einem zweiten, getrennten Sende-Chip oder Lasertreiber-IC - bzw. einer getrennten Sendeplatine - generiert.

In anderen Worten sind Entsprechend dieses Teilaspekts des Entfernungsmessers die Sendeeinheit und die Empfangeinheit als zwei separate, eigenständige elektronische Baugruppen ausgeführt, insbesondere wobei diese über eine Kommunikationsleitung und eine Taktsynchronisationsleitung miteinander verbunden sind. Im Speziellen ist dabei die Kommunikationsleitung unidirektional, und deren Datenübertragung erfolgt synchron zum Takt der Taktsynchronisationsleitung.

Um ein Übersprechen möglichst gering zu halten, ist es weiters vorteilhaft, die Anzahl der Verbindungen zwischen den beiden Chips bzw. Platinen möglichst gering zu halten. Vorteilhaft ist dabei auch eine Kommunikation, welche nur in eine Richtung erfolgt - vorzugsweise von der Störungsempfindlichen Empfangsschaltung hin zur resistenteren Sendeschaltung. Den asynchronen Signalen auf der Sendeschaltung wird somit keine Möglichkeit geboten, auf die Empfangsschaltung überzusprechen. Im Sender können dabei unterschiedlichste Schaltungsaufbauten zum Einsatz kommen, beispielsweise auch die in EP-Patentanmeldung Nr. 11180282 beschriebene Schaltung.

Auch kann zwischen den zwei getrennten Chips bzw. Platinen im Platinenlayout und Gerätedesign eine EMI-Barriere (z.B. als Massefläche in allen Leiterplatten-Lagen, kapseln benachbarter und potentiell störender Schaltungsteile durch Masseflächen, Beabstandung der Leiterbahnen der beiden Schaltkreise in allen Lagen, etc.) vorgesehen werden, welche das Übersprechen via elektromagnetischer Wellen verhindert bzw. dämpft.

Auch kann sowohl der Sender als auch der Empfänger über einen eigenen, speziell abgestimmten Versorgungsfilter mit der Geräteversorgung verbunden sein, wodurch auch eine Kopplung über den Versorgungspfad vermieden bzw. reduziert werden kann.

Die beiden Chips können beispielsweise über eine im Vergleich zu den Abtast- oder Sendefrequenzen langsame Taktleitung miteinander verkoppelt und synchronisiert werden. Im Sendechip kann der langsame Synchronisations-Takt mit einer PLL wieder entsprechend hochgesetzt und daraus die benötigten Arbeitstakte generiert werden, wobei die Synchronität erhalten bleibt. Um eine gute Synchronisation zu erreichen, kann das Synchronisationssignal von der internen PLL auf dem Hauptchip des Empfängers abgezweigt werden und nicht vom Quarz-Oszillator - wodurch Sende- und Empfangseinheit intern in hohem Masse synchronisiert werden können. Eine Übertragung von vergleichsweise niedrigen Frequenzen zur Synchronisation bzw. Kommunikation benötigt zum einen weniger Energie und erlaubt zum anderen den Einsatz von gewöhnlichen CMOS-Treibern anstelle spezieller Kommunikationstreiber (wie etwa differenziellen Signalen, LVDS, etc.). Auch das elektromagnetische Abstrahlverhalten verringert sich bei kleineren Frequenzen. Die Konfiguration und Ansteuerung des Senders kann über eine zur Taktleitung synchrone Datenleitung erfolgen. Um Übersprechen zu vermeiden, kann diese Datenleitung nur unidirektional ausgelegt werden. Hierbei kann beispielsweise schon durch die Wahl von Eingangs- und Ausgangsimpedanz der Kommunikation- und Synchronisationsleitungen ein Übersprechen in eine Richtung minimiert werden, was bei schnellen, impedanzangepassten Kommunikationsleitungen in dieser Form nicht möglich ist. Somit werden die beiden PLLs von Sender und Empfänger aufeinander abgestimmt, d.h. auch ein allenfalls vorhandener Jitter der PLL auf dem Empfängerchip wird auf den Senderchip übertragen.

In anderen Worten erfolgt somit gemäß dieses Teilaspekts der Erfindung eine örtliche Verlagerung der bezüglich des Übersprechens heiklen, asynchronen Signale von der Auswerteelektronik hin zum einem getrennt aufgebauten Sendeteil. Dies erlaubt eine elektromagnetische Trennung, speziell auch durch getrennte Spannungsversorgungskreise, und eine synchrone, unidirektionale Kommunikation vom störungsempfindlichen Empfänger in Richtung des Senders, welcher mitunter einer der primären Störungsverursacher im EDM-System ist. Auch kann der Senderchip großteils als integrierte Schaltung, beispielsweise als ASIC mit sehr geringer Baugröße hergestellt werden, was weitere Vorteile bezüglich der Störaussendung bringt. Analog ist auch ein integrierter, kompakter Aufbau der Empfängereinheit bezüglich des Aufganges von Störsignalen von Vorteil.

Eine elektrooptische Distanzmessung unter Anwendung des beschriebenen Burst-Prinzips kann auch dahingehend genutzt werden, eine Auswertung mit gleichzeitiger Grob- und Feinmessung durchzuführen. Wie beschreiben eignet sich eine TOF-Messung von Lichtpulsen oder Pulspaketen bei entsprechend hohem zeitlichen Pulsabstand gut, um eine eindeutige Distanzmessung zu erhalten, jedoch ist dabei eine hochauflösende Zeitmessung, speziell eines einzelnen Pulses, schwer realisierbar, weshalb dieses als Grobmessung bezeichnet wird.

Im Gegensatz dazu lässt sich eine so genannte Feinmessung durch Digitalisierung der Pulsform und Bestimmung der Phasenlage eines oder mehrerer Pulse mit einer hohen Zeitauflösung erzielen. Aufgrund der Signalperiodizität ist diese aber nicht eindeutig einer einzigen Distanz zuordenbar, sondern meist mehrdeutig. Zur Feinmessung kann weiters das Sendesignal zyklisch, beispielsweise pro Burst-Intervall, mit einem Phasenversatz gegenüber dem - wie beschrieben - synchronisierten Empfänger emittiert werden. Ein derartiger Versatz kann z.B. mit einer PLL- oder DLL-Einheit in der Sendeeinheit lokal im Sender generiert werden, beispielsweise als ein Phasenversatz um jeweils einen ganzzahligen Teil der Periode der Sendefrequenz. Pro Phasenversatz wird somit die Pulsform vom Empfänger an einer anderen Stelle innerhalb des Pulses abgetastet, was eine erhöhte Auflösung der Pulsform bewirkt (vergleichbar mit der zeitgedehnten Darstellung von periodischen Signalen bei Oszilloskopen mit ETS-Sampling - wobei hier jedoch der Sender und nicht der Empfänger verschoben wird). Durch die beschriebene Trennung von Sender und Empfänger kann dabei das Übersprechen trotz Phasenversatz gering gehalten werden. Der Wechsel des Phasenversatzes kann jeweils zu Zeitpunkten geschehen, zu welchen keine Signale emittiert werden, also beispielsweise zwischen den aktiven Bursts. Allfällige Einschwing- oder Stabilisationsvorgänge haben somit keinen Einfluss auf das emittierte Signal.

In anderen Worten führt der Entfernungsmesser eine Grobmessung der Distanz anhand der Laufzeit zwischen einem Aussenden eines Bursts und einem Empfangen des Bursts z.B. anhand einer Hüllkurve des Bursts, beispielsweise mit einer Distanzgenauigkeit größer 10 cm, und eine Feinmessung der Distanz, z.B. anhand einer binären Korrelation von zumindest zwei Signalform der Modulation innerhalb des Bursts, beispielsweise mit einer Distanzgenauigkeit von kleiner 10 cm, insbesondere kleiner 1 cm, durch. Dabei erfolgt die Grob- und Feinmessung zur Ermittlung der Distanz anhand desselben burstmodulierten Signals, also im Rahmen derselben Messung. Speziell ist dabei anhand der Grobmessung eine Eindeutigkeit der mittels Feinmessung ermittelten Distanz bestimmbar.

Entsprechend der vorliegenden Erfindung können nunmehr Grobmessung und Feinmessung gleichzeitig durchgeführt werden. Zum einen kann dabei ein oder mehrere Burst-Pakete - oder auch die Hüllkurve der Burst-Pakete - als ganzes zur Grobmessung herangezogen werden (mit einer von der Burst-Wiederholfrequenz abhängigen Eindeutigkeit), während gleichzeitig die höherfrequente Modulation innerhalb eines oder mehrerer Bursts zur Feinmessung mit geringeren Eindeutigkeitslängen aber erhöhter Messgenauigkeit Verwendung finden kann. Dadurch kann mit einer Messung eine genaue und eindeutige Distanz bestimmt werden. Dieses erlaubt schnellere Messungen, da zur Eindeutigkeitsbestimmung nicht auf die im Stand der Technik bekannten Mehrfrequenzmessungen mit mehreren Sende/Mischfrequenzen (siehe z.B.: WO 2006/063740) oder ähnlichen Prinzipien zurückgegriffen werden muss. Derartige Prinzipien können aber weiterhin, etwa zur Verbesserung der Robustheit der Messung, Anwendung finden.

Speziell kann dabei auch das Burst-Paket gegenüber der Abtastfrequenz zyklisch (beispielsweise jeweils während der Burst-Pausen) phasenverschoben werden, wodurch im Empfänger nur synchrone Signale und somit geringeres Übersprechen vorhanden ist, wie dieses zuvor beschrieben wurden. Insbesondere kann dabei die zuvor erläuterte unidirektionale Takt- und Steuersignal-Übertragung vom Empfänger zum Sender angewandt werden.

Zur Feinmessung in einem Direct-HF-Samplimg-EDM, bei welcher eine amplitudenquantifizierte, digitale Repräsentation des empfangenen Signals vorliegt, können die Signalformen der Pulse zur genauen Zeitbestimmung mit einem Referenzsignal korreliert, also deren Signalformen derart zeitlich gegeneinander verschoben werden, sodass diese möglichst gut in Übereinstimmung gebracht sind. Die hierfür erforderliche zeitliche Verschiebung entspricht dann dem Signallaufzeitunterschied zwischen den Pulsen. Durch den zyklischen Phasenversatz des Sendesignals ist dieses mit einer hohen zeitlichen Genauigkeit möglich.

Auch können die Signale durch mathematische Signalinterpolationen in einer zeitlichen und/oder Amplituden-Auflösung in Übereinstimmung gebracht werden, da durch die erfindungsgemäße Filterung trotz der praktizierten Unterabtastung die Bedingungen für eine mathematische Signalrekonstruktion, speziell das Shannon-Theorem zur Wiederherstellbarkeit zeitquantifizierter Signale, in hohem Maße erfüllt sind. Eine derartige Korrelation kann auch in Form einer binären Korrelation z.B. eines über eine bekannte Referenzstrecke geführten und empfangenen Start-Pulses mit einem über die Messdistanz geführten Stopp-Pulses durchgeführt werden.

Zur Signalkorrelation sind verschiedenste numerische Verfahren bekannt. Beispielsweise kann in der einfachsten Form eine binäre Korrelation durchgeführt werden. Derartige Prinzipien werden etwa in US 6 067 331, DE 034 39 386 DE 034 47 929 beschrieben. Die Korrelation kann entweder nach erfolgter Messung oder auch in Echtzeit durchgeführt werden. Neben der binären Korrelation sind auch weitere Korrelationsverfahren alternativ anwendbar, jedoch sind diese meist mit mehr Rechenaufwand verbunden.

Das erfindungsgemäße Verfahren und die erfindungsgemäße Vorrichtung werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:

Fig. 1 eine erste Ausführungsform eines erfindungsgemäßen Entfernungsmessers als Block-Schema;

Fig. 2 eine Darstellung einer bekannten FIR-Filter-struktur als Blockdiagram;

Fig. 3 eine beispielhafte Ausführungsform einer erfindungsgemäßen Filterstruktur als Blockdiagram;

Fig. 4 eine beispielhafte Filtercharakteristik eines entsprechend konfigurierten, erfindungsgemäßen Filters;

Fig. 5 eine zweite beispielhafte Ausführungsform einer erfindungsgemäßen Signalverarbeitung in einem EDM;

Fig. 6 eine zweite beispielhafte Ausführungsform einer erfindungsgemäßen Signalverarbeitung in einem EDM;

Fig. 7a ein Zeitdiagramm eines beispielhaften Burst-Signals für zwei unterschiedliche Distanzen;

Fig. 7b mehrere Zeitdiagramme beispielhafter Pulse innerhalb eines Burst-Signals mit höherer Zeitauflösung als in Fig. 7a;

Fig. 8 die grundlegenden Stufen der Signalverarbeitung eines direktabtastenden EDMs nach dem Stand der Technik;

Fig. 9 eine dritte beispielhafte Ausführungsform einer erfindungsgemäßen Signalverarbeitung in einem EDM;

Fig. 10 eine vierte beispielhafte Ausführungsform einer erfindungsgemäßen Signalverarbeitung in einem EDM.

Die Darstellungen in den Figuren dienen lediglich zur Illustration und sind nicht als maßstäblich zu betrachten.

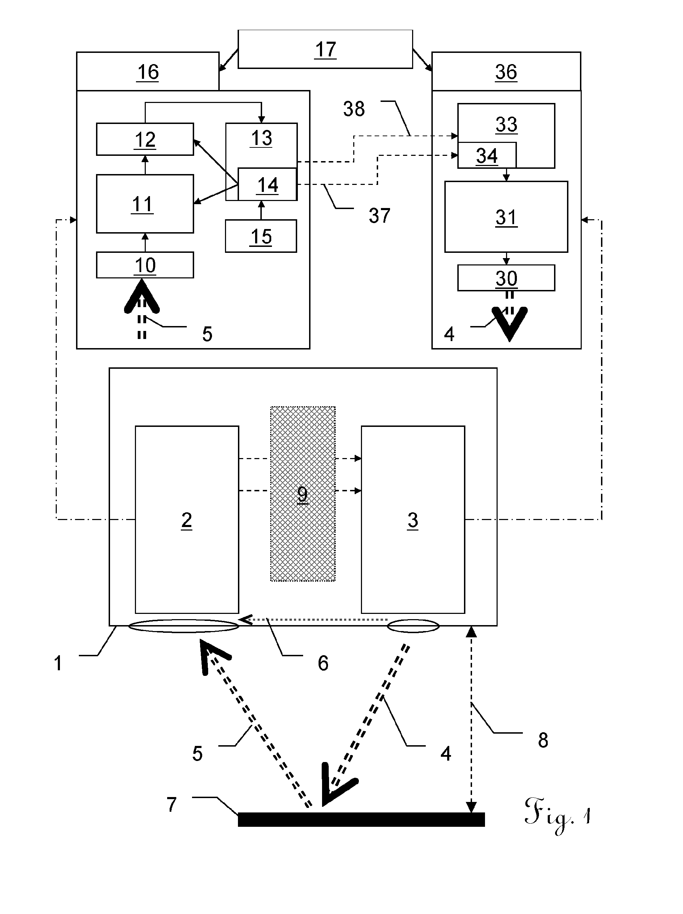

Fig. 1 zeigt eine Ausführungsform eines erfindungsgemäßen optoelektronischen Distanzmesser 1 als Blockdiagramm. In der unteren Hälfte sind die beiden, entsprechend eines Teils der Erfindung getrennten Blöcke der Sendeeinheit 3 und der Empfangseinheit 2, welche durch entsprechende Maßnahmen voneinander EMI-Technisch getrennt sind, was durch die EMI-Barriere 9 symbolisiert wird. Das Zielobjekt 7, dessen Distanz 8 zu bestimmen ist, wirft zumindest einen Teil der von der Sendeeinheit 3 emittierten elektromagnetischen Strahlung 4 als Empfangssignal 5 zur Empfangseinheit 2 zurück. In der oberen Hälfte der Figur ist jeweils ein Blockschema einer Ausführungsform des internen Aufbaus der Sende- 3 bzw. Empfangeinheit 2 dargestellt. Ein Teil der emittierten Strahlung kann dabei auch als Referenzstrahl 6 über einen Referenzpfad bekannter Länge zur Empfangseinheit geführt werden. Dabei kann für den Referenzstrahl und den Messstrahl je eine eigene oder auch eine gemeinsame Empfangseinheit vorgesehen sein.

Die Sendeeinheit 2 mit einem Steuerungsprozessor 33 und einer Treiberstufe 31 für die emittierenden Komponenten 30, welche die elektrischen Signale der Treiberstufe 31 in elektromagnetische Strahlung 4 umwandelt (z.B. eine LED, eine Laserdiode, etc.). Beim Steuerprozessor 33 ist eine PLL 34 dargestellt, welche alternativ auch in der Treiberstufe 31 oder extern angeordnet sein kann. Auch kann Steuerprozessor 33, Treiberstufe 31 und PLL 34 in einem gemeinsamen Chip integriert sein. Das Versorgungsfilter 36 verbindet die Sendeeinheit 3 mit der Spannungsversorgung 17. Das Versorgungsfilter 36 kann - abhängig von den auftretenden Störungen - von einem einfachen Stützkondensator bis hin zu komplexen LCR-Filternetzwerken ausgeführt sein und gegebenenfalls auch eine Spannungsstabilisierung bzw. -regelung oder einen Hoch-oder Tiefsetzsteller enthalten.

Die Empfangseinheit 2 wandelt empfangene elektromagnetische Strahlung 5 mit dem Empfangselement 10 in ein elektrisches Signal um, welches - gegebenenfalls verstärkt - mit einem Filter 11 abgetastet und gefiltert wird. Im Falle von optischer Strahlung kann das Empfangselement eine Photodiode sein, beispielsweise eine Avalanche-Photodiode mit entsprechender Vorspannung. Das hochfrequente Ausgangssignal des photosensitiven Elements kann vor der weiteren Verarbeitung durch das Filter 11 mit einem Transimpedanzverstärker (TIA) aufbereitet werden, insbesondere impedanzgewandelt, verstärkt und/oder in niedriger Ordnung bandbegrenzt (etwa mit einem analogen, aktiven oder passiven Filter). Beispielsweise kann diese Verstärkerstufe unter anderem auch mit einer Schaltung nach EP 2 183 865 aufgebaut werden. Alternativ kann auch die Eingangsstufe des Filters 11 derart ausgelegt werden, dass diese der Ausgangscharakteristik des Empfangselements 10 angepasst ist.

Das gefilterte Empfangssignal am Filter-Ausgang wird von einem Analog-Digital-Wandler 12 digitalisiert - also zeit- und wertquantifiziert - und einer digitalen Recheneinheit 13 (einem Mikroprozessor, DSP, FPGA, ASIC, etc.) zur Weiterverarbeitung zugeführt. Weiters sind eine PLL 14 mit einem Oszillator 15, beispielsweise einem Schwingquarz, verbunden. Wie in elektronischen Schaltung üblich ist auch hier eine (wie zuvor bereits erwähnte) Filterung 16 der Spannungsversorgung 17 dargestellt, welche nicht nur global für die gesamte Schaltung, sondern auch dezidiert bei einzelnen Komponenten der Schaltung platziert sein kann.

Fig. 1 zeigt weiters eine Aufteilung des EDM-Systems 1 - als ein Teilaspekt der vorliegenden Erfindung - zur Vermeidung bzw. Reduktion eines Übersprechens der elektrischen Signale, was ebenfalls zu einer erhöhten Signalqualität und somit zu einer genaueren oder schnelleren Messung beiträgt. Dabei kann eine verbesserte Unterdrückung von Übersprech-Effekten erzielt werden, indem eine örtliche Trennung von Signalen, welche zur Signalauswertung asynchron bzw. nicht in Phase liegend sind, vorgenommen wird. Im Speziellen bei direkt abtastenden Systemen sind derartige asynchrone Signale Verursacher von Störungen in den Messsignalen. Dabei kann beispielsweise die Empfangseinheit 2, welche besonders auf Störungen empfindlich ist, schaltungstechnisch derart aufgebaut werden, dass diese nur zur Auswerteschaltung synchrone Signale, insbesondere Digitalsignale, aufweist. Beispielsweise kann ein einzelner Oszillator 15 via einer PLL 14 das System 2 mit Taktsignalen versorgen, welche alle zueinander synchronisiert sind, insbesondere mit phasensynchronisierten Taktsignalen, deren Frequenzen ganzzahlige Vielfache sind. Mit diesen Taktsignalen werden dann der Filter 11, der ADC 12 und die Auswerteelektronik 13 getaktet. Durch ein derartiges Design können Übersprecheffekte vermieden oder zumindest im Vergleich zu einem asynchronen System reduziert werden, bzw. findet ein allfälliges Übersprechen zu Zeitpunkten statt, in denen die Auswirkungen auf die Signalauswertung gering bzw. nicht vorhanden sind. Gegebenenfalls kann durch einen entsprechend gewählten Phasenversatz eines einstörenden Signals in der PLL 14 ein allfällig dennoch auftretendes Übersprechen vermieden oder zumindest reduziert werden, indem es auf einen Zeitpunkt verschoben wird, an welchem das erfasste Messsignal nicht oder weniger beeinflusst wird.

In EDM-Designs ist neben dem Vorhandensein von asynchronen bzw. von zum Auswertungstakt phasenverschobenen Signalen meist der Sender 3, speziell der Laserdioden- oder LED-Treiber 30, eine der primären Störquellen. Um die messprinzipbedingt geforderten kurzen optischen Pulse hoher Intensität zu generieren, sind in der Ansteuerung kurze Stromimpulse mit hohen Spitzenwerten, steilen Flanken und entsprechend breitrandigem Frequenzspektrum nötig. Zudem sind die Modulations- bzw. Emissionsfrequenz aufgrund des Auswerteprinzips meist auch im selben Größenordnungsbereich wie die Auswertefrequenz, was eine einfache Ausfilterung des störenden Frequenzbereichs erschwert oder verunmöglicht.

Um auch die Sendeschaltung zum Empfänger zu synchronisieren, kann ein Taktsignalausgang der PLL 14 auch vom Empfänger 2 zum Sender 3 geführt werden. Speziell kann durch eine Übertragung eines von der Empfänger-PLL 14 synchronisierten Taktsignals 37 (anstelle des Oszillatorsignals) eine hohe Synchronisationsgenauigkeit erzielt werden, welche auch einen Oszilator-PLL-Jitter ausschließt. Da die Sendeeinheit 3 ebenfalls über eine PLL 34 verfügt, ist es hinreichend zur Synchronisation ein (relativ zu den hohen Auswertetaktraten) relativ niederfrequentes Signal 37 zu übertragen, was sowohl Vorteile in Bezug auf die Störabstrahlung als auch auf die zur Übertragung benötigte Leistung auswirkt. Zudem kann für die Übertragung von derart moderaten Frequenzen auf spezielle Signaltreiber (wie LVDS-Treiber oder dergleichen) verzichtet werden, da simple Ausgangsstufen und Eingansstufen (z.B. in CMOS-Technologie) hinreichend sind. Durch die Signalrichtung vom Empfänger 2 zum Sender 3 kann (speziell auch aufgrund der Impedanzverhältnisse von Signalausgang zu Signaleingang) ein Übersprechen in die Gegenrichtung gering gehalten werden.

Neben der Synchronisation des Senders 3 gegenüber dem Empfänger 2 müssen diese beiden Schaltungsteile über eine Kommunikationsverbindung 38 zur Steuerung der zur Messung erforderlichen Abläufe verfügen. Zur Vermeidung von Übersprechen kann eine derartige Kommunikation ebenfalls in dieselbe Richtung wie das Taktsignal 37 - also unidirektional vom störempfindlichen Empfänger 2 hin zum meist störungsverursachenden Sender 3 - erfolgen. Die Kommunikation 37 kann dabei ebenfalls synchron zum übertragenen Taktsignal 38 erfolgen, beispielsweise als unidirektionale, synchrone serielle Schnittstelle, wodurch zusätzlich kommunikationsbedingte Störungen vermieden werden können.

Die Trennung von Sender 3 und Empfänger 2 erlaubt es auch jedem der beiden getrennten Schaltungsteile einen speziell abgestimmten Versorgungsfilter 16,36 zukommen zu lassen, wodurch auch ein Übersprechen über die Spannungsversorgung 17 verhindert oder zumindest reduziert werden kann. Weiters können zwischen Sender 3 und Empfänger 2 auch entsprechende EMI-Barrieren 9 (z.B: in Form von EMI-Störableitern, Guardbanding-Layouts, Schirmungen, Metallkäfigen, abschirmenden Metallfolien oder Blechen, etc.) angebracht werden.

Die Trennung von Sender 3 und Empfänger 2 kann dabei örtlich, etwa durch die Verwendung von jeweils dezidierten Chips (FPGAs, ASICs, ...) erfolgen. Diese können bei entsprechender layouttechnisch getrennter Gestaltung durchaus physikalisch auf einer gemeinsamen Leiterplatte untergebracht sein. Ein Aufbau des EDM-Systems 1 mit zwei getrennten Leiterplatten (wobei mit Leiterplatten auch Schaltkreise in Dickschicht- oder Dünnschichttechnik oder ASICS gemeint sein können) erlaubt gegebenenfalls mehr Flexibilität im Gerätedesign (z.B. auch zur optischen Justage der Emissionsrichtung des Emitters 30 des Senders 3 gegenüber dem Empfangselement 10 des Empfängers 20 - oder umgekehrt, sowie der Komponentenanordnung innerhalb des Geräts 1). Durch die Trennung und eine entsprechendes Gerätedesign kann eine höhere Übersprech-Unterdrükkung erzielt werden.

Ein erfindungsgemäßes Filter lässt sich zudem neben einem Aufbau als eigene Komponenten auch mittels Standard-Halbleiterprozessen zusammen mit anderen Schaltungen in ein Halbleiterbauelement integrieren, z.B. in einen ASIC. In Folge können auch weitere Systemkomponenten wie der Analog-Digital Wandler, die PLL, Auswertelogik z.B. in Form eines Digitalrechners oder Prozessors, Speicherzellen, etc. alle in einem gemeinsamen Empfänger-Chip integriert werden, welcher zum Betrieb nur noch eine minimale Anzahl an externen Komponenten bedarf. Eine Ausführungsform eines Erfindungsgemäßen EDMs lässt sich somit durch zwei Chips, einer Sendeeinheit und einer Empfangseinheit realisieren. Gegebenenfalls kann das System noch um einen externen Prozessor, Mikrocontroller oder DSP ergänzt werden, welcher Auswerte- oder Interfacing-Aufgaben übernehmen kann.

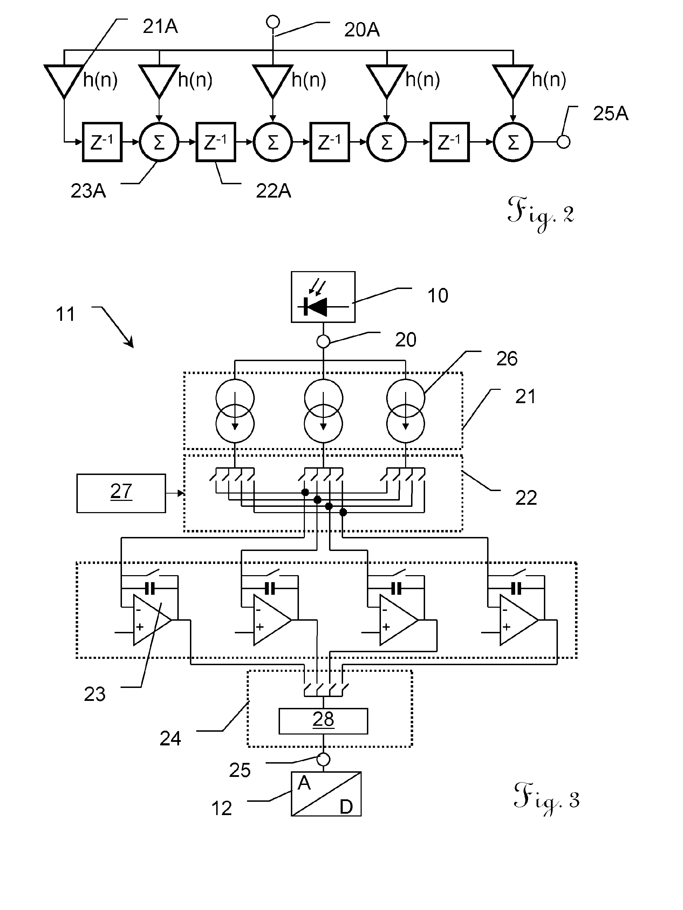

Fig. 2 zeigt die bekannte Struktur eines FIR-Filters, dargestellt in der so genannten zweiten Normalform, mit einem Filtereingang 20A und einem Filterausgang 25A. Darin kommen in mehreren (n) Stufen Elemente zur Zeitverzögerung 22A, zur Bewertung mit Koeffizienten h(n) 21A sowie Summationselemente 23A vor. Der Anschaulichkeit wegen sind diese Elemente jeweils mit demselben Bezugszeichen wie ihre funktionellen Pendants in der erfindungsgemäßen Filter-Implementierung - jedoch mit hinten angestelltem "A" bezeichnet.

In Fig. 3 wird schematisch eine Ausführungsform eines erfindungsgemäßen Filters 11 in Form eines diskreten Aufbaus eines Filters mit endlicher Impulsantwort oder FIR-Filter dargestellt. Bei EDMs im Stand der Technik werden FIR-Filterstrukturen allenfalls nach einer Digitalisierung als rein digitale Filter angewandt, welche die Filterung anhand von zeit- und wertquantifizierten Daten eines ADCs in Software oder digitaler Hardware durchführen.

Entsprechend der vorliegenden Erfindung werden - im Gegensatz zum Software-Pendant - analoge Signale zeitdiskret abgetastet, über Bewertungskoeffizienten in zeitversetzter Weise analog akkumuliert und das resultierende analoge Ergebnis einer Analog-Digital-Wandlung zugeführt. Die Filterung erfolgt also ohne eine Wertquantifizierung des Eingangssignals (wobei von immer auftretenden, natürlichen, physikalischen Quantisierungen in Form von einzelnen Photonen, Elektronen, etc. abgesehen wird). Anders ausgedrückt arbeitet der Filter analog im Amplitudenbereich, jedoch diskret im Zeitbereich. Die Zeitdiskretisierung erfolgt dabei in Form einer Abtastung des Eingangssignals. Ein derartiger Filter bietet gegenüber den klassischen, analogen Pendants deutlich mehr Flexibilität im Design der Filtercharakteristik, welche auch online (z.B. über ein digitales Interface zur Einstellung der Filterkoeffizienten) anpassbar gestaltet werden kann. Auch sind steilere Filter mit besseren Dämpfungswerten realisierbar und ihr Einschwingverhalten ist ebenfalls vorteilhaft.

Das in Fig. 3 dargestellte, konkrete Ausführungsbeispiel dient zur schematischen Erläuterung eines möglichen Aufbauprinzips und der Funktionsweise eines erfindungsgemäßen Filters 11 einer EDM-Empfangseinheit. Das Empfangselement 10 wird, vorzugsweise über eine Transimpedanz-Verstärkerstufe mit dem Filter 11 verbunden. Die beispielhaft dargestellte Ausführungsform des Filters 11 wandelt das Eingangssignal 20 in der Stufe 21 mit einem Stromreplikator in mehrere Instanzen von Zapfströmen um, dabei kann jede Instanz mit einem entsprechenden Koeffizienten 26 (TAP-Koeffizienten) gewichtet werden, wobei die Koeffizienten 26 auch als die jeweiligen Verstärkungs- bzw. Übersetzungsverhältnisse angesehen werden können. Die TAP-Koeffizienten 26 können dabei online z.B. über ein konfigurierbares Widerstandsnetzwerk, variabel ansteuerbare Transistoren, etc. variiert werden. Somit kann nicht nur die Filtercharakteristik beeinflusst (etwa um den Filter einem aktuellen Messmodus anzupassen) werden, sondern können auch allenfalls auftretende Temperaturdriften oder Fertigungstoleranzen ausgeglichen werden.

Ein erfindungsgemäßes Filter 11 kann - bedingt durch seine hohe Stabilität und hohe Reproduzierbarkeitsgenauigkeit im Halbleiterfertigungsprozess - auch mit bei der Produktion fixierten Koeffizienten ausgeführt werden. Durch im Produktionsprozess des Filters definierten, fixen Filterkoeffizienten von hoher Genauigkeit und Stabilität über Temperatur und Zeit, kann auf ein Trimmen des Filters 11 im Produktionsprozess des EDMs gänzlich verzichtet werden. Die notwenigen Anpassungen können in einer Ausführungsform daher beispielsweise auf ein Anpassen eines Verstärkungsfaktors des empfangenen Signals zur optimalen Ausnutzung der ADC-Amplituden-Auflösung beschränkt werden. Diese Verstärkungsanpassung kann beispielsweise während des Betriebs in einigen wenigen diskreten Stufen erfolgen - etwa Abhängig von der Intensität des optischen Empfangssignals.

Im Anschluss folgt eine vom Taktgeber 27 gesteuerte Schaltmatrix 22, dem sogenannten Stromrotator, welche zeitdiskret jede der gewichteten analogen Eingangsinstanzen einem von n analogen Integratoren 23 zuweisen kann.

Die Integratoren 23 summieren die angelegten Eingangsströme über mehrere Taktzyklen, gefolgt von einem Auslesezyklus, in welchem der Integratorwert über die Schalter dem Sampler 28 der Abtaststufe 24 und an den Filterausgang 25 ausgegeben werden. Nach dem Auslesen wird der Integrator für den nächsten Zyklus gelöscht, was auch durch die Schalter in der Integratorstufe 23 symbolisiert wird. In einer speziellen Ausführungsform kann optional der Sampler 28 der Ausgangsstufe auch gleichzeitig als Teil eines Sample&Hold-Gliedes des nachfolgenden ADCs genutzt werden.

Abhängig von der Wahl der Koeffizienten 26 sowie der ebenfalls konfigurierbaren Schaltfolge der Schaltmatrix 22 und der Abtastung 24, kann die Filtercharakteristik des erfindungsgemäß verwendeten Filters 11 angepasst werden. Die Übertragungsfunktion des in der Ausführungsform dargestellten Filters 11 ist:

$$H_{FIR}(z) = \sum_{k=0}^{N_e-1} TC_k \cdot z^{-k} \quad ,$$

mit $z = e^{j2nT_p}$ , $k=1,2,...N_t$ —1 und $TC_k$ als TAP-Koeffizienten.

Was der Übertragungsfunktion eines bekannten digitalen Filters mit endlicher Impulsantwort (FIR-Filter) entspricht, welcher hier jedoch nicht rein numerisch, sondern mit einer analogen Wertedarstellung arbeitet. Anhand dieser Formel lassen sich in bekannter Weise die Koeffizienten 26 uns Schaltsequenzen der Stufen 22 bestimmen. Erst der Ausgang des Filters 11 wird erfindungsgemäß einem Analog-Digital-Wandler 12 zugeführt und die weitere Auswertung wird mit Zeit und Wertquantifizierten Daten durchgeführt. Der Analog-Digital-Wandler arbeitet dabei erfindungsgemäß nach dem zuvor erläuterten Unterabtastungs-Prinzip mit einer Abtastrate unterhalb der Nyquistfrequenz des Filtereingangssignals.

Es ist für den Fachmann offensichtlich, dass sich neben der in Ausführungsbeispiel gezeigten FIR-Filter-Struktur nach dem erfindungsgemäßen Prinzip einer zeitdiskreten aber wertanalogen Filterimplementierung auch andere Filterstrukturen in analoger Weise implementierbar sind. Gegebenenfalls muss dafür die Filterstruktur von der gebräuchlichen Normalform abweichend umgeformt werden, um insbesondere anhand von getakteten Schaltmatrizen und analogen Integratoren erfindungsgemäß als zeitdiskreter, aber wertkontinuierlicher Filter in einen EDM integriert werden zu können. Als Beispiele sind hier etwa ein IIR-Filter, aber auch andere Filtertopologien zu nennen.

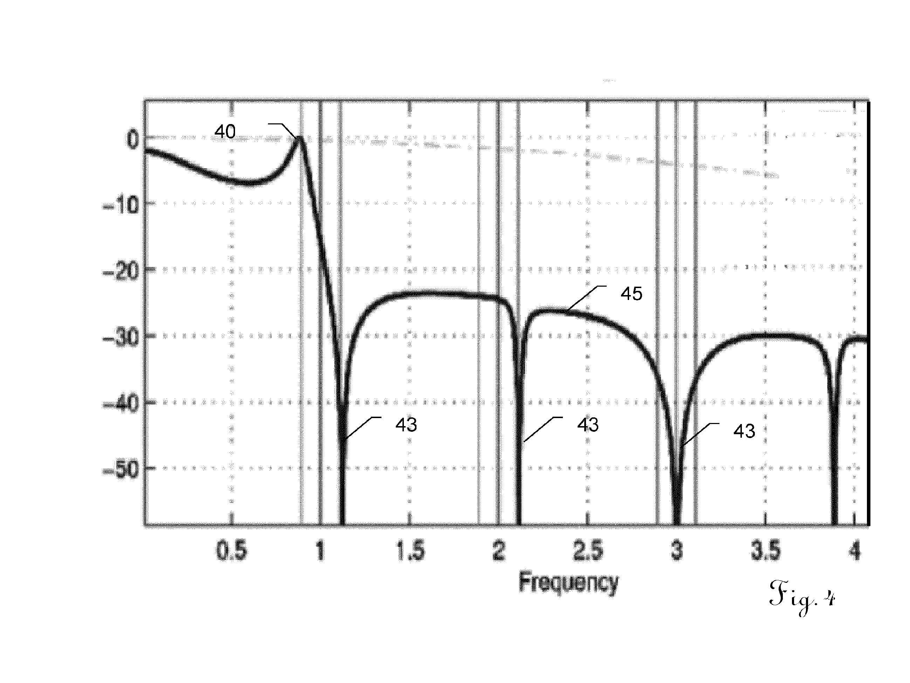

In Fig. 4 ist eine beispielhafte Ausführungsform einer Übertragungsfunktion 45, welche mit einem erfindungsgemäßen Filter 11 bei einsprechender Konfiguration und Parametrierung realisierbar ist, dargestellt. Eine derartige Übertragungsfunktion 45 findet in der nachfolgend beschriebenen Ausführungsform einer EDM-Empfangsschaltung Anwendung. Mit einem derartigen erfindungsgemäßen Filter werden die unerwünschten Aliasing-Produkte 43 unterdrückt, und es werden lediglich die bei der Auswertung, insbesondere bei einer Unterabtastung, gewünschte Frequenz bzw. das gewünschte Frequenzband 40 durchgelassen. Die Filtercharakteristik 45 ist dabei derart ausgelegt, dass neben einer allgemeinen hohen Unterdrückung von unerwünschten Frequenzen um mehr als 20 dB auch selektiv sogenannten Notches 43 mit einer weit stärkeren Dämpfung auf die besonders Aliasing-relevanten Vielfachen der Frequenzen 43 zum Liegen kommen (zumindest annähernd, soweit dies die Konfigurierbarkeit der konkret gewählten Filterstruktur zulässt).

Beispielhaft sei das im Folgenden mit konkreten Zahlenwerten aufgeführte EDM-Design als eine mögliche, konkrete Ausführungsform dargelegt. Die dabei verwendeten Zahlenwerte sind dabei primär als Richtwerte für die Größenordnungen und Verhältnisse der Signale zueinander anzusehen und nicht als abschließende, limitierende Werteangaben.

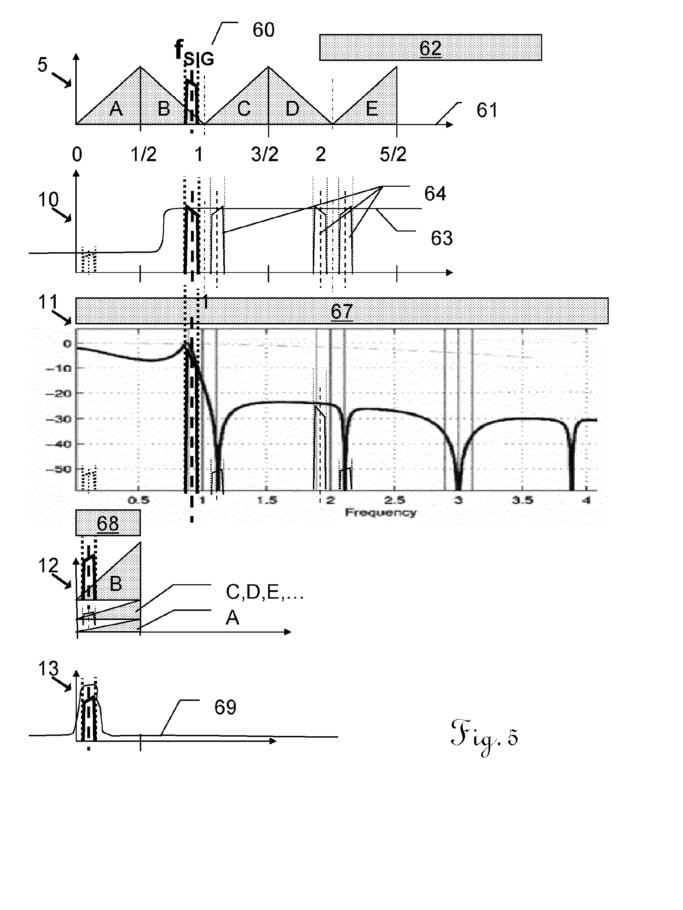

Dabei wird anhand von Fig. 5 die erfindungsgemäße Kombination des Filters 11 und einem Undersampling erläutert. Das erfindungsgemäße Filter eignet sich insbesondere für eine derartige Kombination, kann jedoch auch mit einer die Nyquist-Bedingung einhaltenden Abtastung oder auch mit einer heterodynen oder homodynen Mischung eingesetzt werden. Das ausgesendete Lichtsignal wird beispielsweise in Form von Burst-Paketen mit einer Burst-Wiederholrate von bspw. etwa 78 kHz und einem Tastverhältnis (als Verhältnis der aktiven Sendezeit oder Burstdauer zum Kehrwert der Burstrate) von bspw. 1/10. Die Burst-Pakete sind intern mit einer Frequenz von bspw. etwa 600 MHz amplitudenmoduliert. Dieses ist durch das Signal $f_{SIG}$ 60 im oberen Diagramm dargestellt, wobei die Spektralform nicht dem tatsächlichen Spektrum eines ausgesendeten Bursts entspricht, sondern rein illustrativ zu sehen ist. Das Empfangssignal enthält auch einen Rauschanteil, welcher hier als annähernd weißes Rauschen angenommen und nicht dargestellt ist. Die Frequenzachse 61 ist auf die später erläuterte Abtast- oder Samplingfrequenz normiert. Der Balken 62 stellt die zur Erfassung der Frequenzen von DC bis zur höchsten Frequenz von $f_{SIG}$ 60 mindestens benötigte Abtastfrequenz von zweimal $f_{SIG}$ 60 dar. Die Dreiecke A, B, C, D, E stellen Frequenzbandbereiche dar, auf welche im folgenden noch eingegangen wird. In der in Fig. 1 schematisch gezeigten Ausführungsform wäre dieses etwa dem Block 5 zuzuordnen.

Im Diagramm darunter ist eine erste, analoge Hochpassfilterung 63 des Eingangssignals dargestellt. Mit dieser kann unter anderem auch Hintergrundlicht niedriger Frequenz (z.B. annähernd konstantes Sonnenlicht oder meist mit doppelter Netzfrequenz moduliertes, Künstliches Licht) unterdrückt werden. Gezeigt sind auch die Alias- und Spiegelfrequenzen, welche bei einer Abtastung mit der Abtastrate von 1 die Messwerte verfälschen würden, wobei das im Dämpfungsbereich des Hochpasses 63 befindliche Spektrum im Frequenzbereich A schon entsprechend gedämpft dargestellt ist. In der in Fig. 1 schematisch gezeigten Ausführungsform wäre dieses etwa dem Block 10 zuzuordnen.

Im dritten Diagramm von oben ist nun der Frequenzgang 65 eines erfindungsgemäß eingesetzten Filters dargestellt. Da erfindungsgemäß zur Filterung nur eine Zeitquantifizierung erfolgt, welche lediglich durch einen Schaltvorgang analoger Signale realisierbar ist, kann diese Zeitquantifizierung mit hohen Frequenzen (z.B. etwa im Gigahertz-Bereich) erfolgen. Derart hohe Abtastraten wären bei einer gleichzeitigen Wertquantifizierung einer A-D-Wandlung nur mit deutlich höherem Aufwand und Stromverbrauch realisierbar. Daher kann die Bandbreite 64 dieser Zeitquantifizierung auch sehr hoch, insbesondere höher als das doppelte der Signalfrequenzen von $f_{SIG}$ 60 gewählt werden, speziell wobei sich dieses noch mit Standard-Halbleiterstrukturen realisieren lässt. Der Frequenzgang des erfindungsgemäßen Filters ist durch entsprechende Auslegung derart abgestimmt, dass das gewünschte Signal $f_{SIG}$ 60 durchgelassen wird. Die bei einer Abtastung (mit einer Abtastfrequenz beim Wert 1 der Frequenz-Scala) zu Aliasing mit dem gewünschten Messsignal $f_{SIG}$ 60 führenden Frequenzbändern in den Frequenzbereichen C, D, E werden durch das Filter unterdrückt, insbesondere da sie in den Bereichen der Notches des Frequenzgans 65 liegen. In der in Fig. 1 schematisch gezeigten Ausführungsform wäre dieses etwa dem Block 11 zuzuordnen.

Darunter ist das Filterausgangssignal aus der Sicht eines mit einer Samplingrate von 1 auf der Frequenzskala abtastenden ADCs dargestellt. Dabei sind die Frequenzbereiche A, C, D, E gegenüber dem Frequenzbereich B, welcher das Nutzsignal enthält, stark gedämpft, insbesondere im Bereich des Nutzsignals $f_{SIG}$ 60. In der in Fig. 1 schematisch gezeigten Ausführungsform wäre dieses etwa dem Block 12 zuzuordnen.

Im untersten Diagramm wird gezeigt, wie im Anschluss beispielsweise auf bekannte Weise im Rahmen der Signalauswertung ein digitales Filter, etwa das Bandpassfilter 69, auf die digitalisierten Daten angewendet werden kann. In der in Fig. 1 schematisch gezeigten Ausführungsform wäre dieses etwa dem Block 13 zuzuordnen.

Die Anwendung des Filters 11 in Kombination mit der Unterabtastung, welche als eine Weiterbildung der vorliegenden Erfindung angesehen werden kann, erzielt eine ökonomische und genaue Signalauswertung und folglich auch eine genaue Distanzbestimmung mit geringerem Hardwareaufwand und Stromverbrauch als rein analog gefilterte und hochfrequent abtastende Systeme, welche die Nyquist-Bedingung bezüglich der Modulationsfrequenz einhalten.

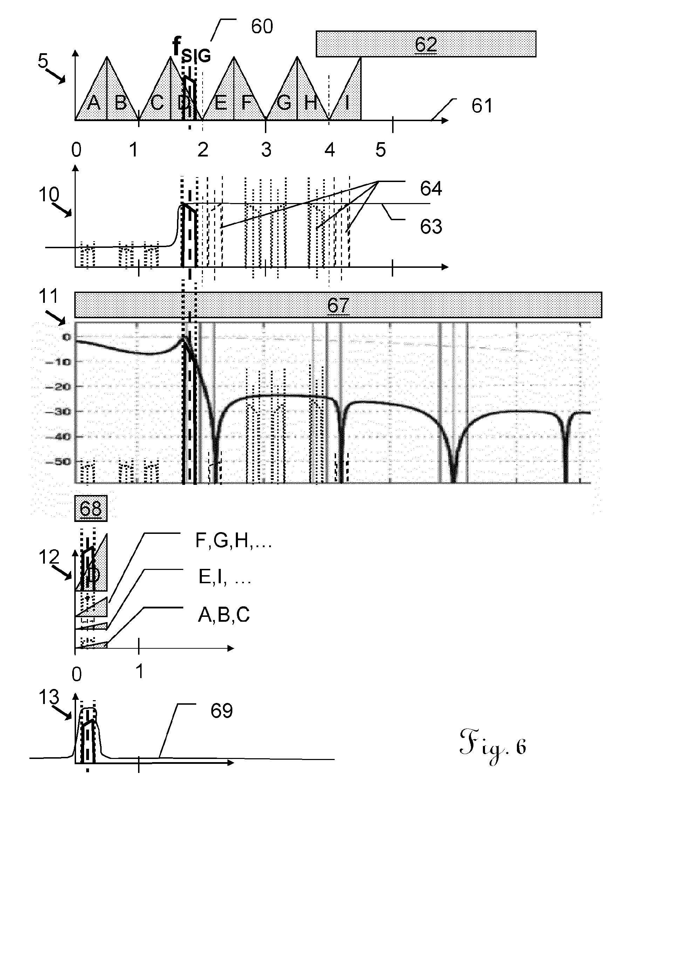

Fig. 6 illustriert das Prinzip einer Zwischenfrequenzabtastung und Unterabtastung anhand von beispielhaften Signalspektren in einer zweiten Ausführungsform. Die Abtastfrequenez des Analog-zu-Digitalkonverters 12 beträgt dabei nur mehr die Hälfte der vorangegangenen Ausführungsform von Fig. 5. Entsprechend sind mehr Aliasing und Spiegelbänder A,B,C,E,F,G,H,I vorhanden, deren Unterdrückung Analog zu der Beschreibung zu Fig. 5 erfolgt. Durch die somit nochmals halbierte Samplingfrequenz des ADCs kann diese nochmals ökonomischer erfolgen und die Hardwareanforderungen weiter reduziert werden. Auch die Software-Verarbeitungsgeschwindigkeit kann infolge ebenfalls entsprechen verringert werden. Die Diagramme zeigen, wie trotz Unterabtastung die Nyquist-Bedingung in hohem Maße eingehalten werden kann und somit eine Signalrekonstruktion möglich ist. Speziell im Zuge der Unterabtastung auftretende unerwünschte Aliasing- und Spiegeleffekte können durch das erfindungsgemäße Filter, insbesondere bei dem erläuterten, entsprechenden Filterdesign, hinreichend unterdrückt werden. Dadurch wird eine Signalauswertung zur Distanzmessung mit hoher Genauigkeit erreicht, wobei zugleich die Systemkosten und den Energieverbrauch gesenkt werden können.

In für den Fachmann offensichtlicher Weise können auch weitere Ausführungsformen mit einem erfindungsgemäßen Filter realisiert werden, wobei Parameter wie Unterabtastungsverhältnis, Anzahl der Filtertaps, Filterkoeffizienten, etc. ingenieursmäßig entsprechend der Bedürfnisse des konkreten Distanzmessers adaptiert bzw. optimiert werden können.

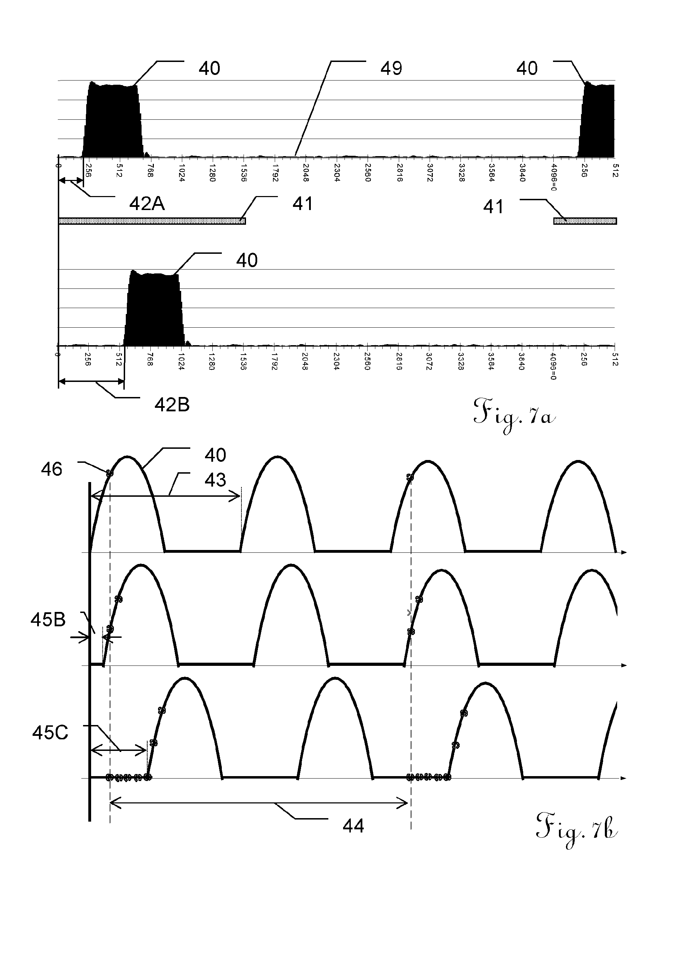

Fig. 7a zeigt zwei Beispiele einer Grobmessung zur Distanzbestimmung anhand einer Laufzeit 42A,42B (TOF) gemessen anhand der Hüllkurven der Burst-Pakete 40 bei zwei unterschiedlichen Distanzen. Dabei sind oben zwei der periodisch mit der Burstfrequenz ausgesendeten Burstpaktete 40 und die dazwischen liegende Totzeit 49 dargestellt. Der Distanzmesser führt eine Unterabtastung mit den an der Abszisse dargestellten Sample-Nummern durch. Speziell kann dabei auch nur der mit dem Bezugszeichen 41 bezeichnete Teilbereich nach dem Senden des Pulses gesampelt werden, in welchem Teilbereich ein Retoursignal zu erwarten ist, wenn sich das Ziel innerhalb eines dadurch vorgegebenen Distanzmessbereichs befindet. In der im weiteren beschriebenen, beispielhaften Ausführungsform wird jedoch kontinuierlich gesamplet. Anhand der Anzahl Samples vom Senden bis zum Empfang des Bursts (speziell dessen Hüllkurve) lässt sich eine erste, grobe Distanzbestimmung durchführen. Bei dem illustrativen Beispiel einer Burst-Rate von 78 kHz und einer Abtastung von 4096 Samples pro Periode ergibt dies eine Zeitauflösung von 3 ns bei einer Abtastrate von ca. 320 MHz der Analog-Digital-Wandlung. Der Ausgang des Filters 11 kann dabei z.B. mit einem 10 Bit ADC digitalisiert werden. Es kann also ein ADC aus dem preisgünstigen Standardsortiment eines Herstellers verwendet werden. Alternativ kann ein solcher ADC durch Einbindung eines entsprechenden IP-Core in die Auswerteeinheit, beispielsweise gemeinsam mit dem Filter 11 als Ein-Chip-Lösung realisiert werden, - wobei dieser aufgrund der moderaten Abtastrate und Auflösung mit Standard-Halbleiterprozessen herstellbar ist.

Da der erfindungsgemäß eingesetzte Filter 11 praktisch keine bzw. eine sehr kurze Einschwingzeit benötigt, kann erfindungsgemäß mit verhältnismäßig kurzen Bursts - theoretisch bis hin zu einzelnen Pulsen gearbeitet werden. Das schnelle Einschwingverhalten des erfindungsgemäßen Filters 11 ermöglicht auch eine genauere Grobmessung, da nach dem Filter bereits der erste Puls eines Bursts eine hohe Signalqualität aufweist, sodass seine zeitliche Signalposition für die Grobmessung genau bestimmbar ist. Bei analogen Filtern können aufgrund des Filtereinschwingens der erste oder die ersten Pulse starken Signalverzerrungen und/oder Dämpfungen unterworfen sein, was die erzielbare Genauigkeit der Grobmessung einschränkt. Auch zur Feinmessung sind bei analogen Filtern meist der erste Puls (oder die ersten Pulse) eines Bursts zu verwerfen, da deren Signalform durch Einschwingvorgänge verzerrt und/oder gedämpft ist.

Im oben genannten Beispiel eines Phasenversatzes im Sender von 1/16 der Pulsperiode pro Burst kann beispielsweise anhand von 16 Bursts die Pulsform in hoher zeitlicher Auflösung bestimmt werden, insbesondere auf 1/6 der Pulsperiode und anhand der Amplitudenauflösung und Interpolation auch entsprechend höher. Die Kombination der oben genannten Vorteile ermöglicht eine hohe Messrate im kHz-Bereich bis MHz-Bereich. Es kann die Auflösung und Messgenauigkeit noch weiter verbessert werden, indem mehrfache Messungen, Interpolationen und Mittelwertbildungen, beispielsweise gemeinsam mit einer Maximum-Likelyhood-Auswertung angewendet werden, wobei immer noch Messraten von mehr als einem Kilohertz erzielbar sind.

Anhand der dargestellten TOF-Zeit 42A bzw. 42B kann somit, rein anhand der Samplingrate, eine Grobdistanz mit einer Genauigkeit von ca. 30 m ermittelt werden - bei Interpolation entsprechend genauer, was den notwendigen Eindeutigkeitsbereich der Feinmessung vorgibt, um eine genaue und eindeutige Gesamtmessung zu erzielen. Es kann zur weiteren Verbesserung der Eindeutigkeit beispielsweise auch die so genannte Differenzfrequenzmethode angewandt werden.

Fig. 7b zeigt beispielhaft Zeitdiagramme der Pulsmodulation innerhalb des Bursts in Form von Pulsen 40 mit einer Periodendauer 43 als Modulationsfrequenz. Praktische Ausführungen können auch mit anderen Modulationsformen als der hier gezeigten Pulsform arbeiten, z.B. zumindest annähernden Rechteck- Trapez- oder Dreieckpulsen, etc.. Zum Abtastzeitpunkt 46 wird die Amplitude digitalisiert, mit einer Abtastrate von 1/Abtastperiode 44. Im Diagramm darunter ist das Signal 40 gegenüber dem oberen Signal um die Zeit 45B phasenversetzt, im dargestellten Beispiel wiederum um 1/16 der Periodendauer des Signals. Dieser Phasenversatz kann beispielsweise per Burstpaket geändert werden, während des Burstpakets 40 konstant gehalten werden und in der Totzeit 49 zwischen dem Aussenden gewechselt werden, insbesondere um allfällige Einschwingvorgänge während des eigentlichen Messsignals zu vermeiden. Im untersten Diagramm ist ein Phasenversatz von 6/16 und die jeweiligen Abtastzeitpunkte 46 des Signals 40 dargestellt. Die somit erzielte, interne Auflösung der Signalform 40 durch die Abtastzeitpunkte ist deutlich ersichtlich. Durch das bereits beschriebene, - die Erfindung weiterbildende - Verschieben des Sendesignals ist das Erzielen einer erhöhten Zeitauflösung auch bei einem streng synchronen Design der Empfängerschaltung möglich. Das phasenverschobene Signal kommt dabei lediglich in der - entsprechend des Teilaspekts der Erfindung - EVM-Technisch bzw. räumlich getrennten Sendeschaltung vor, und somit können Störungen durch Signalübersprechen weitgehend vermieden werden. Lediglich eine Synchronisation und Datenübertragung vom Empfänger zum Sender und die Spannungsversorgung verbinden - wie in der hier erläuterten, in Fig. 1 dargestellten beispielhaften Ausführungsform - die Sende- und Empfangseinheiten elektrisch miteinander.

Die Auswertung der Signallaufzeit kann beispielsweise auch in Form einer Korrelation von Sende- bzw. Referenzsignal mit dem Empfangssignal erfolgen, beispielsweise anhand einer binären Korrelation der beiden Signalformen, wobei der zeitliche Versatz mit der höchsten Übereinstimmung der Signalformen der Signallaufzeit entspricht, welche bei der Korrelation auch mit einer Zeitauflösung unterhalb der durch die Abtastrate des ADCs bestimmten Abtastrate bestimmt werden kann. Insbesondere, da erfindungsgemäß durch den Filter 11 trotz der Unterabtastung eine Rekonstruierbarkeit der Signalform aus den digitalisierten Daten in hohem Maße gegeben ist.

Der erfindungsgemäße Filter 11 weist eine im Vergleich zu seinen analogen Pendants stabilere Laufzeit (auch als Delay oder Phasenversatz bezeichnet) vom Filtereingang zu Filter-ausgang auf, insbesondere auch bezüglich Temperaturdrift und Alterungserscheinungen. Ein erfindungsgemäßes Filter 11 kann zwar eine vielfach längere Laufzeit haben, als ein rein analoges Filter aus dem Stand der Technik, jedoch ist diese deutlich stabiler. Für eine hochgenaue Zeitbestimmung, wie diese zur Distanzmessung erforderlich ist, ist die absolute Größe der Filterlaufzeit gegenüber deren Stabilität von untergeordneter Bedeutung, da ein konstanter Absolutwert in einfacher Weise numerisch kompensierbar ist, speziell bei Verwendung einer vergleichenden Messung mit einem Referenzpfad von bekannter Länge, oder - bedingt durch die hohe Stabilität- auch nur einmalig im Rahmen einer Werkskalibrierung.

Beispielsweise kann in weiterer Folge eine Auswertung mit einer - insbesondere phasensynchronen - Akkumulation von mehreren Messungen der Burst-Signale bzw. Impulse innerhalb der oder des Bursts erfolgen. Eine derartige periodische Akkumulation resultiert aber auch spektralen Periodizitäten. Mit dem erfindungsgemäßen Filter 11, bei welchem durch Wahl der entsprechenden Struktur und Koeffizienten die Notches 43 seines Frequenzganges auf die durch die Akkumulation kumulierten, unerwünschten Frequenzbereiche gelegt sind, kann eine weitere Verbesserung des auszuwertenden Messergebnisses erzielt werden und somit einen genauere und robustere Distanzmessung.

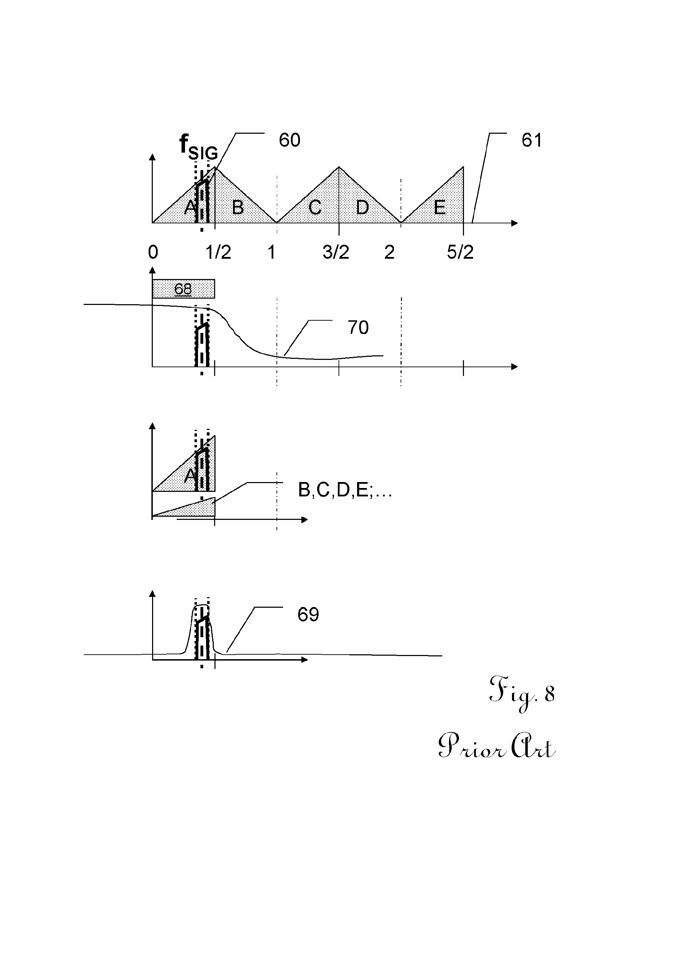

Fig. 8 zeigt einen EDM ohne heterodyne Mischerstufe mit einer direkten Abtastung des hochfrequenten Eingangssignals nach dem Stand der Technik in einer ähnlichen Abfolge von Spektralbildern wie in Fig. 5 bzw. Fig. 6. Im obersten Diagramm sind wiederum das Eingangssignal $f_{SIG}$ 60 und eine Aufteilung in Frequenzbänder A,B,C,D,E dargestellt. Darunter ist eine analoge Alias-Filterung mit der Charakteristik 70 dargestellt, welche Frequenzen über der Nyquistfrequenz 68 der Abtastung bei der halben Samplingfrequenz dämpft. Da die Charakteristiken 70 von praktisch realisierten analogen Filtern beschränkt sind, ist dieses jedoch nicht beliebig, insbesondere nicht im theoretisch nötigen, optimalen Maße möglich. Ein analoger Filter, welcher eine gewünschte Frequenzcharakteristik für eine hinreichende Unterdrückung der Aliasing-Frequenzen aufweist, ist nicht nur schwer realisierbar, sondern auch problematisch bezüglich Temperaturdrift, Alterungserscheinungen der Bauelemente, Stabilität, Linearität des Phasengangs, etc. Darunter ist im dritten Diagramm das Resultat nach der Zeit- und Wertqunatisierung der A/D-Wandlung dargestellt.

Das unterste Diagramm zeigt eine - nunmehr in der digitalen Repräsentation mögliche - digitale Filterung, z.B. eine FIR-Filterung, welche steile Filter mit hohen Dämpfungen erlaubt, mit welchen das zur Messung notwendige Signalspektrum extrahiert werden kann. Dabei ist im Stand der Technik bei einer Modulationsfrequenz von 600 MHz eine Analog-Digital-Wandlung mit einer Rate von 1.2 GHz nötig, wohingegen im Vergleich dazu bei der oben erläuterter, erfindungsgemäßer Ausführungsform lediglich eine Analog-Digital-Wandlung mit einer Samplingrate von beispielsweise durchgeführt wird, wie dies etwa Fig. 6 illustriert. Die erfindungsgemäße Filterung mit einem zeitdiskreten aber wertanalogen Aufbau ermöglich aber trotz der Unterabtastung eine sehr hohe Signaltreue der digitalen Repräsentation, insbesondere in den für die Laufzeit-Distanzmessung essentiellen Kriterien. Dass diese Reduktion der Hardwareanforderungen eine Reduktion der Systemkosten erlaubt, ist dem Fachmann offensichtlich, insbesondere da ein 1.2 GHz ADC mit einer Auflösung von 10 Bit derzeit wohl zu den High-End-Produkten zu zählen ist, welcher auch nicht ohne weiteres in einen Custom-ASIC integrierbar ist.

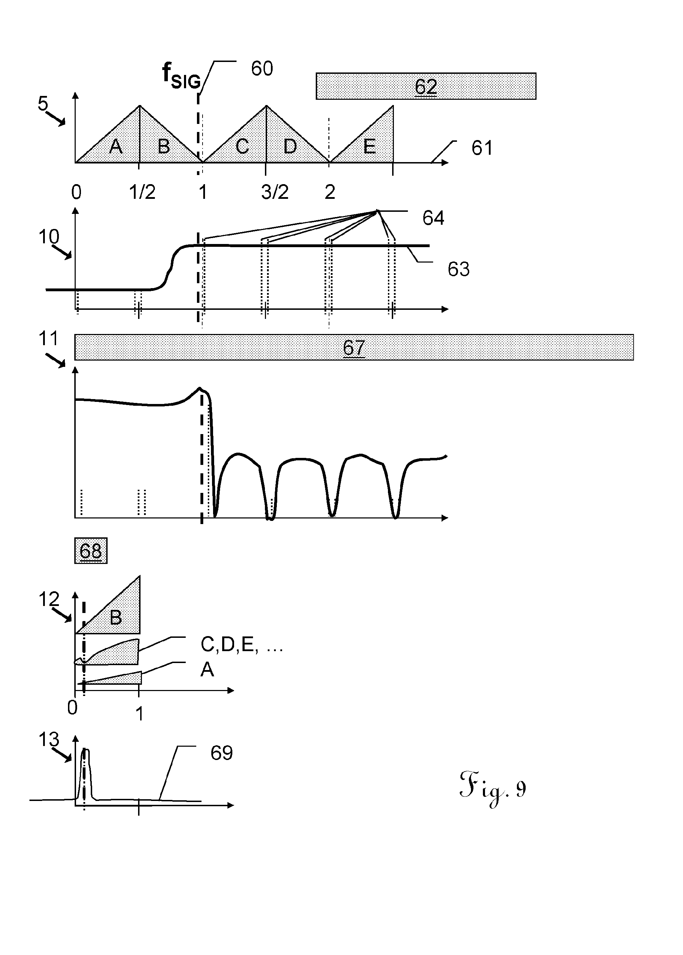

Fig. 9 zeigt eine weitere Ausführungsform einer SignalVerarbeitung in einer Empfangseinheit 2 eines EDMs 1 entsprechend der vorliegenden Erfindung. Die Darstellung ist in Ihrer Abfolge gleich wie in Fig. 6 aufgebaut, jedoch sind die Frequenzverhältnisse variiert. Die Modulationsfrequenz 60 des Sendesignals 4 ist dabei sehr nahe zur Abtastfrequenz bei einem Wert von 1 auf der Frequenzachse, welche hier auf die Abtastfrequenz des ADCs 12 normierten ist. Die Abtastfrequenz des ADCs 12 liegt in dieser Ausführungsform also sehr nahe bei der Modulationsfrequenz der Sendeeinheit 3. Die nahe bei DC liegenden Signalanteile werden wieder im Eingang gedämpft, beispielsweise durch einen analogen Hochpassfilter 63, welcher durch eine Verstärkerstufe im Empfangselement 10 gebildet werden kann.

Das erfindungsgemäße Filter 11 ist dabei wiederum derart konfiguriert, dass die Notches der gewählten Filterstruktur mit den Aliasingbereichen zusammenfallen. Die Höhe der punktierten Linien bei den Aliasing und Spiegelfrequenzen symbolisiert wiederum die Amplitudenwerte dieser Frequenzanteile nach der Filterung, welche bei der Abtastung des ADCs 12 superpositioniert werden. Diese Darstellung soll die Dämpfung dieser unerwünschten Frequenzanteile symbolisieren, wobei die Darstellung rein illustrativ und nicht maßstäblich zu betrachten ist. Ein exaktes Zusammenfallen aller Aliases mit den Notches ist gegebenenfalls, je nach der gewählten konkreten Filterstruktur (Anzahl der Taps, Koeffizienten, etc.) nicht immer möglich und erfindungsgemäß auch nicht zwingend erforderlich, speziell da das erfindungsgemäße Filter 11 auch etwas abseits der Notches im Sperrbereich eine verhältnismäßig hohe Dämpfung (z.B. von 20 dB oder mehr) aufweist. Die bei der Abtastung 12 dargestellten Spektren C,D,E symbolisieren die Auswirkung dieser Notches durch eine Vertiefung im dargestellten Frequenzgang im Bereich des gewünschten Messsignals aus Spektrum B. In der gezeigten Ausführungsform wird etwa die zur eigentlich evaluierten Signalfrequenz direkt benachbarte Aliasingfrequenz bewusst toleriert und von der Filterstruktur 11 mit relativ geringer Dämpfung durchgelassen. Die Gesamtperformance des EDMs 1 kann dennoch eine hinreichende Distanzmessgenauigkeit erzielen, speziell aufgrund der genannten Vorteile wie Filterstabilität über Temperatur und Zeit, der konstanten Filterlaufzeit, etc.

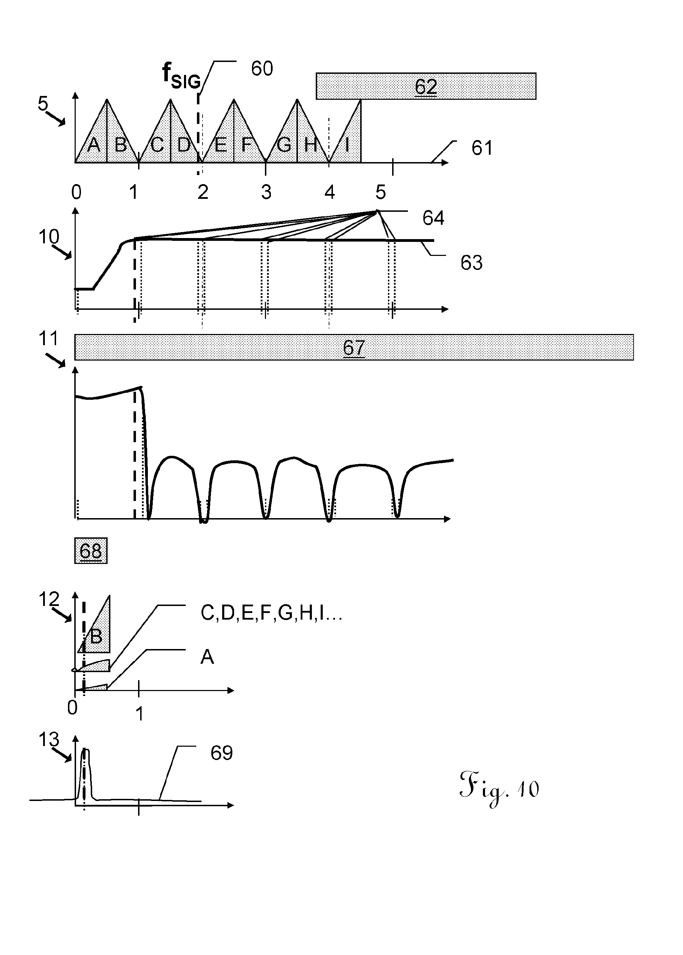

Fig. 10 zeigt eine weiter Ausführungsform, bei welcher die Abtastung mit einer - gegenüber Fig. 9 - halbierten Abtastfrequenz ausgeführt ist. In diesem Fall wird das durch die ADC-Abtastung heruntergespiegelte Signal bei etwa der Hälfte der Modulationsfrequenz des Senders evaluiert. Hierbei werden in dieser Ausführungsform die anderen, unerwünschten Signalanteile, insbesondere jene die sich durch Aliasing direkt mit dem evaluierten Signal überlagern, hinreichend stark durch das erfindungsgemäße Filter unterdrückt. Entsprechend verfügt das Filter 11 über mehr Taps und somit mehr Notches als jenes der vorherigen Ausführungsform aus Fig. 9, um eine ähnliche Distanzmessperformance zu erreichen. Es wird sozusagen zugunsten eines geringeren Aufwandes beim ADCs 12 der Aufwand im Filter 11 erhöht.

Abwägungen zwischen den hier beispielhaft gezeigten Ausführungsformen, bzw. weitere Optimierungen des erfindungsgemäßen Konzepts, sind dabei meist anhand wirtschaftlicher Bewertungen z.B. im Zuge einer Kostenoptimierung zu treffen.

**Patentansprüche**

1. Elektrooptischer Entfernungsmesser (1), insbesondere Laser-Distanzmesser, mit

   ■ einer Sendeeinheit (3), insbesondere mit einer Laserdiode (30) und einem Laserdiodentreiber (31), zur Aussendung von intensitätsmodulierter optischer Strahlung (4), insbesondere als burstmodulierte Strahlung mit einer Burstrate, einem Burst-Tastverhältnis und einer Pulsfrequenz innerhalb eines Bursts,
   ■ einer Empfangseinheit (2) zum Empfang eines von einem Zielobjekt (7) zurückgeworfenen Anteils (5) der optischen Strahlung durch ein photosensitives elektrisches Bauelement (10) und Umwandlung in ein elektrisches Empfangssignal, insbesondere eine Photodiode,

■ einem Eingangsfilter (11) zur Filterung des Empfangssignals,

■ einem Analog-Digital-Wandler (12) zur Digitalisierung des gefilterten Empfangssignals und

■ einer elektronischen Auswerteeinheit (13), welche auf Basis einer Signallaufzeit anhand des digitalisierten Empfangssignals eine Distanz (8) vom Entfernungsmesser (1) zum Zielobjekt (7) ermittelt, **dadurch gekennzeichnet, dass**

das Eingangsfilter (11) eine zeitdiskret und wertkontinuierlich implementierte, insbesondere digitale, Filterstruktur ist, insbesondere eine FIR-Filterstruktur, im Speziellen mit einer zeitquantifizierenden, abtastenden Schaltstufe für das Empfangssignal, einer Gewichtungsstufe von analogen Amplitudenwerten mit Koeffizienten, einer analogen Summationsstufe und einer zeitdiskreten Ausgangsstufe.

2. Entfernungsmesser (1) nach Anspruch 1, **dadurch gekennzeichnet, dass**
der Analog-Digital-Wandler (12) eine Abtastrate unterhalb der doppelten Frequenz der Intensitätsmodulation der optischen Strahlung aufweist, insbesondere eine Abtastrate von etwa der Frequenz der Intensitätsmodulation oder darunter.

3. Entfernungsmesser (1) nach einem der vorangehenden Ansprüche 1 oder 2, **dadurch gekennzeichnet, dass** eine zeitdiskrete Ausgangsstufe des Eingangsfilter (11) zugleich eine Sample&Hold-Stufe des Analog-Digital-Wandler (12) ist.

4. Entfernungsmesser (1) nach einem der vorangehenden Ansprüche 1 bis 3, **dadurch gekennzeichnet, dass** das Empfangssignal vor dem Analog-Digital-Wandler (12) mittels einer in Hardware aufgebauten FIR-Filterstruktur gefiltert wird,
insbesondere wobei die FIR-Filterstruktur mit

■ einer Eingangsstufe (21), welche mehrere analoge Instanzen des Empfangssignals (20) erzeugt,

■ einer Gewichtungsstufe (26), welche die analogen Instanzen jeweils mit einem Koeffizienten gewichtet,

■ einer Schaltstufe (22), welche sequenziell und zeitdiskret die gewichteten Instanzen einer Anzahl von analogen Summationselementen (23), insbesondere analogen Integratoren, zuweist, und

■ einer Ausgangsstufe (24), welche die Werte der Summationselemente (23) sequenziell an einem Filterausgang (25) zur Verfügung stellt und die Summationselemente (23) im Anschluss zurücksetzt, aufgebaut ist.

5. Entfernungsmesser (1) nach Anspruch 4, **dadurch gekennzeichnet, dass**
die FIR-Filterstruktur eine konfigurierbare Frequenzcharakteristik aufweist, insbesondere indem die Gewichtungsstufe (26) konfigurierbare Koeffizienten aufweist und/oder die Schaltstufe (22) eine konfigurierbare Sequenzfolge aufweist.

6. Entfernungsmesser (1) nach einem der Ansprüche 1 bis 5, **dadurch gekennzeichnet, dass**
die Filterstruktur (11) derart konfigurierbar ist, dass Frequenzen größer als die Abtastrate eine Dämpfung von zumindest 20 dB erfahren, insbesondere wobei jene Aliasingfrequenzbänder, welche aufgrund der Unterabtastung zur Überlagerung von Aliasing auf das Empfangssignal führen, mit selektiven Notches in den Bereichen der unerwünschten Aliasingfrequenzbänder eine Dämpfung von zumindest 40 dB erfahren.

7. Entfernungsmesser (1) nach einem der Ansprüche 1 bis 6, **dadurch gekennzeichnet, dass**
dieser als handgehaltenes und batteriebetriebenes Laser-Entfernungsmessgerät (1) ausgeführt ist, insbesondere mit sichtbarem Laserlicht (4) und einem Distanzmessbereich von zumindest 1 m bis 50 m und einer Distanzmessgenauigkeit mindestens im mm-Bereich.

8. Entfernungsmesser (1) nach einem der Ansprüche 1 bis 7, **dadurch gekennzeichnet, dass**
die Sendeeinheit (3) und die Empfangeinheit (2) als zwei separate, eigenständige elektronische Baugruppen ausgeführt sind, insbesondere wobei diese über eine Kommunikationsleitung (38) und eine Taktsynchronisationsleitung (37) miteinander verbunden sind, welche Takte der Sendeeinheit (3) und der Empfangeinheit (2) synchronisiert,
im Speziellen wobei die Kommunikationsleitung (38) unidirektional ist und deren Datenübertragung synchron zur Taktsynchronisationsleitung (37) erfolgt.

9. Entfernungsmesser (1) nach einem der Ansprüche 1 bis 8, **dadurch gekennzeichnet, dass**
die Sendeeinheit (3) mit einer Phasenversatzschaltung die Intensitätsmodulation mit einem einstellbaren Phasenversatz gegenüber der Abtastung in der Empfangseinheit (2) durchführt, insbesondere wobei der Phasenversatz jeweils in Pausen zwischen zwei Bursts geändert wird.

10. Entfernungsmesser (1) nach einem der Ansprüche 1 bis 9, **dadurch gekennzeichnet, dass**

■ eine Grobmessung der Distanz (8) anhand der Laufzeit zwischen einem Aussenden eines Bursts und einem Empfangen des Bursts anhand einer Hüllkurve des Bursts, insbesondere mit einer Distanzunsicherheit von mehr als 10 cm, und

■ eine Feinmessung der Distanz (8) anhand einer Signalform der Modulation innerhalb des Bursts, insbesondere mit einer Distanzunsicherheit von weniger als 10 cm, insbesondere wobei die Grob- und Feinmessung zur Ermittlung der Distanz (8) anhand desselben burstmodulierten Signals erfolgt,

im Speziellen zur Auflösung von Mehrdeutigkeiten bei der mittels Feinmessung ermittelten Distanz (8) anhand der Grobmessung.

11. Elektronischer Empfängerchip, insbesondere als ASIC, für einen Entfernungsmesser (1) nach einem der vorangehenden Ansprüche 1 bis 10, welcher

■ dem Eingangsfilter (11) und
■ dem Analog-Digital-Wandler (12), insbesondere mit einer maximalen Abtastrate unterhalb der doppelten Modulationsfrequenz der vom Entfernungsmesser ausgesendeten optischen Strahlung,

des Entfernungsmessers (1) aufweist.

12. Verfahren zur Entfernungsmessung mit

■ einem Aussenden von hochfrequent amplitudenmodulierter optischer Strahlung (4), insbesondere mit einem Burstmodulieren der optischen Strahlung als hochfrequent modulierte Pulspakete gefolgt von Pausen,

■ einem Empfangen eines von einem Zielobjekt (7) zurückgeworfenen Anteils (5) der optischen Strahlung (4) mit einem photosensitiven elektrischen Empfangselement (10) und umwandeln in ein hochfrequentes elektrisches Empfangssignal,

■ einem Filtern des hochfrequenten Empfangssignals,

■ einem Digitalisieren des gefilterten Empfangssignals,

■ einem Auswerten des digitalisierten Signals zur Bestimmung der Signallaufzeit zwischen Aussenden und Empfangen zur Bestimmung der Entfernung anhand einer Signallaufzeit,

**dadurch gekennzeichnet, dass**

das Filtern mit einer Filterstruktur (11), insbesondere einer FIR-Filterstruktur, erfolgt, welche zeitdiskret und wertkontinuierlich, insbesondere mit einem zeitquantifizierenden Abtasten und einem analogen Gewichten und Summieren, arbeitet.

13. Verfahren nach Anspruch 12, **dadurch gekennzeichnet, dass**

das Digitalisieren mit einer Unterabtastung mit einer Abtastrate unterhalb der doppelten Frequenz des Amplitudenmodulierens erfolgt, insbesondere mit einer Abtastrate, welche zumindest annähernd gleich oder geringer als die Frequenz des Amplitudenmodulierens ist.

14. Verfahren nach einem der Ansprüche 12 oder 13, **dadurch gekennzeichnet, dass**

das Aussenden mit einem variablen Phasenversatz gegenüber dem Digitalisieren erfolgt, wobei das Digitalisieren mit einer konstanten Frequenz erfolgt, insbesondere wobei das variieren des Phasenversatzes beim Aussenden in Pausen zwischen dem Aussenden zweier Pulspakete erfolgt, im speziellen mit einem Phasenversatz um einen Teil der Pulsperiode des hochfrequenten Amplitudenmodulierens.

15. Verfahren nach einem der Ansprüche 12 bis 14, **dadurch gekennzeichnet, dass**

■ ein Grobmessen der Distanz durch ein Bestimmen der Signallaufzeit einer Hüllkurve des empfangenen Anteils (5) erfolgt und

■ ein Feinmessen der Distanz (8) durch ein Bestimmen der Laufzeit anhand einer Phasenlage der hochfrequenten Amplitudenmodulation innerhalb des empfangenen Anteils (5) des Burst-Pulspakets erfolgt, insbesondere mit einer binären Korrelation der Amplitudenmodulation und eines Referenzsignals,

insbesondere wobei eine Auflösung von Mehrdeutigkeiten beim Auswerten der Feinmessung anhand der Grobmessung erfolgt.

Fig. 1

*Fig. 2*

*Fig. 3*

Fig. 4

Fig. 5

Fig. 6

*Fig. 7a*

*Fig. 7b*

$f_{SIG}$  60  61

0  1/2  1  3/2  2  5/2

A  B  C  D  E

68  70

A  B,C,D,E;...

69

Fig. 8

Prior Art

**f**$_{SIG}$  60

62

5

A | B | C | D | E

61

0   1/2   1   3/2   2

10

64

63

11

67

68

12

B

C,D,E, ...

A

0   1

13

69

*Fig. 9*

5

$f_{SIG}$    60

62

A  B   C  D   E  F   G  H   I

61

0    1    2    3    4    5

10

64

63

11

67

68

12

C,D,E,F,G,H,I…

B

A

0    1

13

69

𝔉ig. 10

Europäisches
Patentamt

European
Patent Office

Office européen
des brevets

## EUROPÄISCHER RECHERCHENBERICHT

Nummer der Anmeldung

EP 11 18 7964

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2004/135992 A1 (MUNRO JAMES F [US]) 15. Juli 2004 (2004-07-15) * Abbildungen 6,8 * * Zusammenfassung * * Absätze [0059], [0060], [0107] * ----- | 1-15 | INV. G01S7/483 G01S17/10 |
| A | WO 2011/082481 A1 (KABEN WIRELESS SILICON INC [CA]; WIGHT JAMES STUART [CA]; RILEY THOMAS) 14. Juli 2011 (2011-07-14) * Zusammenfassung * * Absatz [0011] * ----- | 1 | |

RECHERCHIERTE
SACHGEBIETE (IPC)

G01S

Der vorliegende Recherchenbericht wurde für alle Patentansprüche erstellt

| Recherchenort | Abschlußdatum der Recherche | Prüfer |
|---|---|---|
| Den Haag | 23. April 2012 | Alberga, Vito |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

........................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 11 18 7964

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

23-04-2012

| Im Recherchenbericht angeführtes Patentdokument | Datum der Veröffentlichung | Mitglied(er) der Patentfamilie | Datum der Veröffentlichung |
|---|---|---|---|
| US 2004135992 A1 | 15-07-2004 | US 2004135992 A1<br>US 2008100822 A1 | 15-07-2004<br>01-05-2008 |
| WO 2011082481 A1 | 14-07-2011 | KEINE | |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1957668 A
- WO 2006063740 A
- WO 2007022927 A
- WO 2011076907 A
- WO 2009062306 A
- EP 1913416 A
- EP 11180282 A
- US 6067331 A
- DE 03439386
- DE 03447929
- EP 2183865 A